(19) Europäisches Patentamt / European Patent Office / Office européen des brevets

(11) **EP 3 648 948 B1**

(12) **EUROPÄISCHE PATENTSCHRIFT**

(45) Veröffentlichungstag und Bekanntmachung des Hinweises auf die Patenterteilung:
**05.10.2022 Patentblatt 2022/40**

(21) Anmeldenummer: **18724862.0**

(22) Anmeldetag: **15.05.2018**

(51) Internationale Patentklassifikation (IPC):
**B29C 55/08** (2006.01)   **F16C 33/16** (2006.01)
**B29C 55/16** (2006.01)   **B29C 55/20** (2006.01)

(52) Gemeinsame Patentklassifikation (CPC):
**B29C 55/08;** B29C 55/165; B29C 55/20;
F16C 33/16

(86) Internationale Anmeldenummer:
**PCT/EP2018/062487**

(87) Internationale Veröffentlichungsnummer:
**WO 2019/007577 (10.01.2019 Gazette 2019/02)**

(54) **GLEITELEMENT INSBESONDERE FÜR EINE RECKANLAGE UND/ODER TRANSPORTKETTE SOWIE EINE ZUGEHÖRIGE RECKANLAGE ODER TRANSPORTKETTE**

SLIDING ELEMENT, IN PARTICULAR FOR A STRETCHING PLANT AND/OR A TRANSPORT CHAIN AND AN ASSOCIATED STRETCHING PLANT AND/OR TRANSPORT CHAIN

ÉLÉMENT COULISSANT, EN PARTICULIER POUR UNE INSTALLATION D'ÉTIREMENT ET/OU UNE CHAÎNE DE TRANSPORT ET UNE INSTALLATION D'ÉTIRAGE ET/OU UNE CHAÎNE DE TRANSPORT ASSOCIÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2017 DE 102017115175**

(43) Veröffentlichungstag der Anmeldung:
**13.05.2020 Patentblatt 2020/20**

(73) Patentinhaber: **Brückner Maschinenbau GmbH & Co. KG**
**83313 Siegsdorf (DE)**

(72) Erfinder:
• **SWOBODA, Martin**
  **83395 Freilassing (DE)**
• **HÄUSL, Tobias**
  **83278 Traunstein (DE)**
• **KULINYAK, Emmerich**
  **83324 Ruhpolding (DE)**

• **KRAUS, Sebastian**
  **83313 Siegsdorf (DE)**
• **MURNER, Georg**
  **83346 Bergen (DE)**
• **UNTERREINER, Markus**
  **83250 Marquartstein (DE)**
• **BAMBERGER, Werner**
  **83278 Wolkersdorf (DE)**
• **GIAPOULIS, Anthimos**
  **83278 Traunstein (DE)**
• **BAUMEISTER, Michael**
  **83365 Nußdorf (DE)**

(74) Vertreter: **Flach Bauer & Partner Patentanwälte mbB**
**Adlzreiterstraße 11**
**83022 Rosenheim (DE)**

(56) Entgegenhaltungen:
EP-A1- 0 500 447   EP-A1- 3 048 162
EP-A2- 0 471 329   DE-A1- 4 221 318

**Beschreibung**

Die Erfindung betrifft Gleitelement insbesondere für eine Reckanlage und/oder Transportkette sowie eine zugehörige Reckanlage oder Transportkette nach dem Oberbegriff des Anspruchs 1.

Technisches Feld

Reckanlagen finden insbesondere bei der Kunststofffolien-Herstellung Anwendung.

Bekannt sind sequentielle Reckanlagen, bei denen ein Kunststofffilm in zwei aufeinander folgenden Stufen gereckt wird, beispielsweise zunächst in Längsrichtung und dann in Querrichtung (oder umgekehrt).

Bekannt sind ebenso sogenannte Simultan-Reckanlagen, in welchen ein Kunststofffilm gleichzeitig in Quer- und Längsrichtung gereckt werden kann.

Stand der Technik

Eine gattungsbildende Querreckanlage oder Querreckstufe innerhalb einer Reckanlage ist aus der US 5 797 172 A, der WO 2014/94 803 A1 oder der DE 198 57 289 C1 bekannt geworden. Gemäß diesen Vorveröffentlichungen wird eine zu reckende Materialbahn, in der Regel also ein Kunststofffilm, mittels Kluppen erfasst, die an Ketten befestigt sind und die auf beiden Seiten der zu reckenden Materialbahn auf umlaufenden Führungsschienen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegenden Kluppen auf den Führungsschienenabschnitten mit einer Querkomponente divergierend zur Transportrichtung voneinander wegbewegt werden) zu einer Auslaufzone und dann auf einem Rückweg wieder zur Einlaufzone verfahren, wobei die Folie in der Auslaufzone beispielsweise einer gewissen Relaxation und/oder Wärmenachbehandlung unterzogen werden kann. Diese Querreck-Anlage umfasst eine Führungsschiene längs der die Transportkette geführt wird.

Die Transportkette im Allgemeinen und die Kluppenkörper im Besonderen, die an den Kettengliedern in Längsrichtung der Transportkette versetzt liegend ausgebildet sind, weisen Gleitelemente oder Rollenelemente auf, die mit der Kluppe mit bewegt werden, und die an den beiden gegenüberliegenden, voneinander wegweisenden, vertikal und zueinander parallel ausgerichteten Lauf- und Gleitflächen anliegen. Die an Kettengliedern angebrachten Tragkörper können dabei in mehreren Gleitebenen bestehende Gleitelemente aufweisen. Bei simultanen Reckanlagenkönnen können sowohl die Führungsschienenelemente als auch die Steuerschienenelemente mit Gleitelementen ausgerüstet sein.

Aus der DE 198 57 289 C1 ist ein verbessertes Verfahren zur Schmierung von Transportsystemen und Teilen davon, insbesondere zur Schmierung entsprechender Teile einer Reckanlage sowie eine verbesserte Schmiermittel-Vorrichtung bekannt. Ein entsprechendes Transportsystem mit verbesserter Schmierung erfolgt durch eine kontinuierliche Mikromengenschmierung, wodurch eine Reduzierung des Schmiermittelverbrauchs möglich wird.

Graphit- Gleitelementen und/oder Graphitpartikel enthaltende Elastomere, Thermoplaste oder Duroplaste und sind prinzipiell aus der WO 2014/94 803 A1 und der DE 39 25 737 A1 bekannt.

Aus der EP 0 138 117 A2 ist ferner eine Warenbahn-Transportkette bekannt, bei der in Kettenlängsrichtung betrachtet ein Tragkörper für Kluppen befestigt ist und diese Kettenglieder im Kettenquerschnitt etwa eine auf der Seite liegende U-Form besitzen. An jedem dieser besonders geformten Kettenglieder sind am unteren U-Schenkel sowie am Verbindungssteg großflächige, speziell geformte Platten aus schmierungsfreiem Gleitmaterial, vorzugsweise reibungsarmen Polytetrafluorethylen, durch Nieten befestigt. Diese Gleitmaterialplatten sind dabei auch in der Weise besonders geformt, dass sie mit entsprechend ausgearbeiteten Ausnehmungen an den zugehörigen Kettengliedern zusammenpassen. Allein diese bauliche Ausführung erfordert die Herstellung einer speziell für diesen Zweck ausgebildeten Grundkette mit aufwendigen Kettengliedern für die einzelnen Tragkörper.

Aus der WO 2014/94 803 A1 sind Gleitelemente bekannt, die sowohl die Folien- und Kettenkräfte als auch die Gewichtskräfte der Kette aufnehmen können.

Die EP 0 471 329 B1 und die EP 1 652 877 B1 beschreiben die Verwendung von kunstharzgebundenem imprägniertem Graphit als Gleitkörper.

Aus der DE 42 21 318 A1 ist ein kohlenstoffgefülltes, keramisches Verbundmaterial sowie ein Verfahren zu seiner Herstellung bekannt.

Daraus ist zu entnehmen, dass das kohlenstoffgefüllte Verbundmaterial auch Graphit umfasst, wobei das Gleitelement Poren aufweisen soll und das Hohlraumverhältnis des kohlenstoffgefüllten keramischen Verbundmaterials kleiner oder gleich 20% ist. Die Partikelgröße der als Ausgangsmaterial für die Gleitelemente verwendeten Graphitpartikel sollen in einem Bereich von 0,01 bis 30 µm liegen.

Aufgabe der Erfindung

Aufgabe der vorliegenden Erfindung ist es vor diesem Hintergrund ein Gleitelement insbesondere für eine Reckanlage und/oder Transportkette zum einen sowie eine zugehörige Reckanlage oder Transportkette zum anderen zu schaffen, wobei die Gleitelemente sowie die mit den Gleitelementen ausgestattete Reckanlage oder Transportkette so geschaffen sind, dass gegenüber herkömmlichen Gleitelementen oder Reckanlagen oder Transportketten der Schmiermittelbedarf deutlich gesenkt werden kann.

Die Aufgabe wird erfindungsgemäß bezüglich eines Gleitelementes entsprechend den im Anspruch 1 und bezüglich einer Reckanlage oder Transportkette entsprechend den im Anspruch 13 angegebenen Merkmalen gelöst. Vorteilhafte Ausgestaltungen der Erfindung sind in den Unteransprüchen angegeben.

Es muss als ausgesprochen überraschend bezeichnet werden, dass es durch die Verwendung der erfindungsgemäßen Gleitelemente möglich wird, dass für den Betrieb von Transportketten (die auf Führungsschienen (und Steuerschienen bei simultanen Systemen) bewegt werden, worüber die Transportketten abgestützt und getragen werden) und insbesondere für den Betrieb von Reckanlagen der gegenüber dem Stand der Technik benötigte Schmiermittelbedarf drastisch reduziert werden kann.

Aus dem Stand der Technik war der Einsatz von Graphit-Gleitelementen durchaus bekannt. Wie bereits ausgeführt, ist aus der EP 0 471 329 B1 wie auch aus der DE 197 49 785 A1 Gleitkörper als bekannt zu entnehmen, die aus Graphit bestehen oder Graphit umfassen. Diese vorbekannten Gleitkörper sind mit anorganischen Salzen und anschließend mit Polymeren imprägniert.

Im Rahmen der Erfindung hat sich allerdings gezeigt, dass die nach dem Stand der Technik bekannten Graphit-Gleitelemente und insbesondere auch die vorstehend genannten Graphit-Gleitelemente für die Verwendung von Transportketten und insbesondere in Reckanlagen weniger geeignet sind.

Gemäß der Erfindung zeigen sich die Begleitelemente unter anderem durch folgende Merkmale aus:

- die als Ausgangsmaterial für die Herstellung des verwendeten Graphitpartikel liegen in einer Partikelgrößenverteilung derart vor, dass der Medianwert d(50) für die Partikelgröße zwischen 14 $\mu$m bis 18 $\mu$m und die Werte d(10) zwischen 2 $\mu$m bis 4 $\mu$m und für d(90) zwischen 42 $\mu$m und 50 $\mu$m liegen,
- das Maximum der Partikelgrößenverteilung (mittlere Partikelgröße, Erwartungswert) des als Ausgangsmaterial für die Herstellung der Gleitelemente verwendeten Graphitpulvers als auch des durch Verpressen hergestellten Gleitelementes weisen eine maximale Partikelgrößenverteilung zwischen 3 $\mu$m bis 15 $\mu$m auf, und
- das Gleitelement ist mit anorganischen Salzen imprägniert und/oder anorganische Salze sind im Gleitelement eingelagert,

Besonders gute Ergebnisse lassen sich im Rahmen der Erfindung dann erzielen, wenn eine oder mehrere der folgenden bevorzugten Varianten realisiert und/oder Bedingungen erfüllt werden:

- Die Gleitelemente sind mit einer Imprägnierung vorzugsweise in Form Phosphaten (Salze und Esther der Orthophosphorsäure) versehen,
- Die Gleitelemente sind mit Metallsalzen insbesondere in Form von Aluminiumphosphat ($AlPO_4$) imprägniert,
- Die anorganischen Salze insbesondere in Form von Phosphaten und besonders bevorzugt in Form des Aluminiumphosphats sind in dem Gleitelement oder Gleitkörper mit einem Anteil von 1 Gew-% bis 20 Gew-% eingelagert,
- Die Phosphate und insbesondere Metallphosphate sollen bevorzugt Korngrößen im Bereich von d50 = 30 $\mu$m, d90 = 100 $\mu$m und d50 = 5 $\mu$m, d90 = 15 $\mu$m und besonders bevorzugt von d50 = 7 $\mu$m, d50 = 30 $\mu$m aufweisen.
- Die Gleitelemente sind nicht nur in einem Oberflächenbereich oder einer Oberflächenschicht bis zu 1 mm oder 2 mm sondern bevorzugt vollständig durchimprägniert,
- Die zur Herstellung der Gleitelemente benötigten Ausgangsstoffe werden mit einem geeigneten Verfahren miteinander "verbacken", beispielsweise durch eine isostatische Verpressung, wodurch die Gleitelemente letztlich erzeugt werden,
- Die Partikelgrößen und die Partikelverteilung des Graphitpulvers, welches als Ausgangsmaterial für die Herstellung der Gleitelemente verwendet wird, sollen ebenfalls in bestimmten Bereichen liegen. Das Maximum der Partikelgrößenverteilung (mittlere Partikelgröße, Erwartungswert) des als Ausgangsmaterial verwendeten Graphitpulvers wie aber auch des durch Verpressen hergestellten Gleitelementes liegt zwischen 3 bis 15 $\mu$m, je nach gewünschten mechanischen Werten, z.B. der Biegefestigkeit. Bevorzugt haben sich mittlere Partikelgrößen zwischen 7 bis 10 $\mu$m als geeignet erwiesen. Als Medianwert d(50) wurden Größen zwischen 14-18 $\mu$m, d(10) zwischen 2-4 $\mu$m und d(90) zwischen 42-50 $\mu$m gemessen (Zur Charakterisierung einer Partikelgrößenverteilung werden die Werte $d_{10}$, $d_{50}$ und $d_{90}$ verwendet. Der Wert von $d_{50}$ ist als mittlere Partikelgrößenverteilung definiert [DIN 13320]. Die Werte $d_{10}$ und $d_{90}$ werden zur Beschreibung der Breite einer Partikelgrößenverteilung $d_{breite}$ = $d_{90}$ - $d_{10}$ verwendet).
- Die offene Porengrößen und/oder Porenverteilung der Gleitelemente beträgt zumindest $\geq$ 8 Vol% oder vorzugsweise

$\geq$ 9 Vol%, 10 Vol%, 11 Vol%, 12 Vol%, 13 Vol%, 14 Vol% oder $\geq$ 15 Vol%. Die entsprechenden Werte für die offene Porengröße des Gleitelementes soll dabei ferner $\leq$ 20 Vol%, insbesondere $\leq$ 18 Vol%, 16 Vol%, 15 Vol%, 14 Vol%, 13 Vol%, 12 Vol% oder insbesondere $\leq$ 11 Vol% sein.

- Die Gleitelemente weisen beispielsweise ölgesättigte Poren oder allgemein fluidgefüllte Poren auf, und zwar unter üblichen Betriebsbedingungen, wie beispielsweise bei einer Luftfeuchtigkeit von $\geq$ 5 (bevorzugt 8-20) [g/m$^3$].

Als besonders vorteilhaft hat es sich bei den Versuchen gezeigt, wenn die Poren der Gleitelemente möglichst vollständig mit Öl getränkt werden, indem sie z.B. über mehrere Stunden vor dem Einbau in die Lagerelemente in einem Ölbad gelagert werden. Diese primäre Sättigung verringert den Abrieb erheblich.

Die Partikelgrößen und Partikelverteilungen des Graphits sind wesentlich z.B. für die mechanische Eigenschaft des Gleitelementes. Dies betrifft nicht nur die Abriebeigenschaften, sondern z.B. auch die Biegefestigkeit des Materials. Ebenso beeinflusst die Partikelgröße und -verteilung des Graphitpulvers (als Ausgangsstoff bzw. in der verpressten Form nach Herstellung des endgültigen Gleitelementes) das thermische und chemische Verhalten.

Die anorganischen Salze und deren Größe sowie deren Größenverteilung beeinflusst das Reib- und damit das Abriebverhalten.

Die wichtigste Bedingung zur Erzielung der erfindungsgemäßen Vorteile ist dabei, dass die Gleitelemente eine Mindest-Porengröße wie angegeben aufweisen. Eine zusätzliche Verbesserung lässt sich also dann erzielen, wenn die Gleitelemente wie erwähnt eine entsprechende Imprägnierung unter Verwendung von anorganischen Salzen (insbesondere Phosphaten) erhalten haben und/oder einer isostatischen Pressung unterzogen wurden.

Dabei werden im Rahmen der Erfindung die größten Vorteile erzielt, wenn alle drei vorstehend genannten Bedingungen realisiert sind.

Eine Ummantelung der Gleitelemente oder der Graphit-Gleitelemente mit Polymeren und/oder eine Füllung der Poren (insbesondere der Poren an der Oberfläche der Gleitmittel) mit Polymeren (wie in er EP 0 471 329 B1 beschrieben) führt gegenüber der Erfindung sogar zu Nachteilen bezüglich der Gleitwirkung, da dann die Reibung wiederum erhöht wird und dadurch eine größere Menge an Gleit- oder Schmierstoffen verwendet werden muss. Insbesondere bei Reckanlagen besteht dadurch die Gefahr, dass der zu reckende Kunststofffilm einer größeren Gefahr der Verunreinigung mit Schmiermittel und insbesondere Schmiermitteltröpfchen unterliegt.

Werden also demgegenüber derartige erfindungsgemäße Gleitelemente oder Gleitelement-Paarungen im Zusammenhang mit Transportketten und vor allem in Reckanlagen eingesetzt, so lässt sich die erläuterte drastische Ölmittelreduzierung realisieren. Insoweit sind also die erfindungsgemäßen Gleitkörper den herkömmlichen Graphit-Gleitelementen weit überlegen, da die nach dem Stand der Technik bekannten Gleitelemente oder Graphit-Gleitelemente hohe Abriebe insbesondere in den stark belasteten Kurvenabschnitten und insbesondere bei Reckanlagen in der Reckzone aufweisen.

Im Rahmen der Erfindung werden also einige wesentliche Vorteile realisiert.

So lassen sich die Abriebe in der Einlaufphase von etwa 1-2 Stunden deutlich reduzieren.

Durch die dramatische Reduzierung der Schmiermengen wird die Verschmutzung der herzustellenden Folie durch Kondensatniederschläge und Mikrotröpfchen verringert bzw. vermieden.

Durch die erfindungsgemäßen Gleitelemente ist es ferner möglich die Temperaturen der an der Gleitpaarung beteiligten Materialien anzuheben.

Durch die neuen Materialien ist es möglich über verschiedene Baureihen von Kettentransportsystemen einheitliche Basiskomponenten zu verwenden, die lediglich durch Adapterlösungen an die Kluppen und Führungsschienen (und Steuerschienen) angepasst werden müssen.

Durch die neuen Materialien können auch andere Fluide, verschieden von Hochleistungsölen, als Mittlerschicht zwischen den Gleitpaarungen eingesetzt werden.

Die erfindungsgemäßen Graphit-Gleitelemente lassen sich insbesondere bei der Gleitbahnschmierung als auch bei der Kettenbolzenschmierung einsetzen.

Diese Graphite können auch in Polymermatrizen eingelagert werden, und zeigen ähnliches Verhalten, wie die "reinen" Graphitelemente Tecasint, Sintimit (eingetragene Marken der Fa. Ensinger, DuPont SCP) etc.

Im Rahmen der Erfindung haben sich noch weitere überraschende Ergebnisse ergeben. So werden die genannten Vorteile nicht nur bei Verwendung der erfindungsgemäßen Gleitkörper realisiert, sondern vor allem dann, wenn die erfindungsgemäßen Gleitkörper im Rahmen einer spezifischen Gleitpaarung verwendet werden, also z.B. mit Führungs- oder Steuerschienen, die eine bestimmte Materialbeschaffenheit oder Oberflächenbeschaffenheit aufweisen.

Die Erfindung betrifft insoweit auch ein Verfahren zur weiteren Reduzierung der Schmiermittel und insbesondere Ölmengen bei der Schmierung von Transportsystemen oder Teilen davon, also nicht nur durch Verwendung spezifischer Gleitkörper oder Gleitelemente, sondern vor allem auch unter Verwendung der erfindungsgemäßen Gleitkörper oder Gleitelemente im Zusammenhang mit entsprechenden Führungsschienen (und Steuerschienen). Erfindungsgemäß werden also spezifische Gleitpaarungen vorgeschlagen, die es ermöglichen, den Schmiermittelbedarfeinsatz zu verringern.

Gleitpaarungen

Wenn von Gleitpaarungen gesprochen wird, so versteht man dabei zum einen eine Führungsschiene oder Steuerschiene (für eine Transportkette), d.h. insbesondere auch eine Führungs- und/oder Steuerungsschiene bei Reckanlagen, sowie entsprechende Gleitelemente, die an der Kette oder Kluppenkette oder dem Pentagraphsystem vorgesehen oder ausgebildet sind. Nach dem Stand der Technik bestehen diese Gleitelemente -wie bereits erwähnt - häufig aus Kunststoffen, die mit Carbonfasern, Aramidfasern oder Glasfasern verstärkt sind, z.B. auch mit Beimischungen aus PTFE, also sogenannten Polytetrafluarethylen oder aus Materialien wie PEEK, also aus Polyetheretherketon.

Wie bereits erwähnt, wurden im Stand der Technik Gleitpaarungen mit Graphitelementen vorgeschlagen (z.B. der erwähnten EP 0 471 329 A1 oder der EP 1 652 877 A1), ohne dass dabei explizit auf die Verwendung in Reckmaschinen und deren spezielle Anforderungen eingegangen wurde.

Im Rahmen der Erfindung hat sich dabei gezeigt, dass sich Gleitpaarungen besonders eignen, die aus den erfindungsgemäßen Gleitelementen (wie oben abgehandelt) und daneben aus Schienensystemen bestehen, insbesondere im Fall einer Reckanlage einer Führungs- oder Steuerschiene, die aus einem Material besteht, das einen gleichen oder ähnlichen thermischen Ausdehnungskoeffizienten aufweist wie die Gleitelemente. Ferner hat sich im Rahmen der Erfindung herausgestellt, dass gute Gegenlaufpartner für die erfindungsgemäßen Gleitelemente (die in großem Anteil Graphit umfassen) harte Werkstoffe sind, wie beispielsweise Grauguss, Hartmetall, Aluminiumoxid, Siliziumkarbid, Glas, DLC-beschichtete Werkstoffe (also sogenannte Diamond-like-Carbon, also diamantähnlicher amorpher Kohlenstoff) sowie insbesondere hart legierte Stähle, wie sie für Führungsschienen und Steuerschienen von Reckanlagen verwendet werden.

Die Erfindung wird nachfolgend anhand von Ausführungsbeispielen näher erläutert. Dabei zeigen im Einzelnen:

Figur 1:  eine schematische Draufsicht auf eine Querreckanlage, die auch Teil einer sequenziellen Reckanlage sein kann;

Figur 2:  eine Querschnittsdarstellung durch eine Trageinrichtung mit einer Transportkette mit zugehörigen Kluppen, die auf der einen Seite der Trageinrichtung in Vorschubrichtung der Folienbahn und auf der gegenüberliegenden Seite auf den Rückweg zurückgeführt werden;

Figur 3a:  eine räumliche Darstellung eines Ausschnitts einerTransportkette mit zugehöriger Kluppeneinheit, wie sie in einer Kunststofffolien-Reckanlage eingesetzt wird;

Figur 3b:  eine entsprechende Darstellung zu Figur 3a, jedoch teilweise in einer Querschnittsdarstellung durch den Kettenbolzen der Transportkette hindurch;

Figur 4:  eine räumliche Darstellung eines Gleitelementes oder Gleitkörpers, welches im Querschnitt eine U-Form aufweist und welches an den aufeinander zu weisenden Innenseiten mit einem erfindungsgemäßen Gleitelement ausgestattet ist;

Figur 5:  eine räumliche Darstellung eines Gleitbodenelements, wie es an der Unterseite der Transportkette und/oder eines Kluppenkörpers eingesetzt und/oder vorgesehen sein kann, um mit einer entsprechenden Tragfläche einer Tragschiene wechselzuwirken;

Figur 6:  ein zu Figur 3a abgewandeltes Ausführungsbeispiel, bei welchem die Gleitkörper direkt in den Transportketten- und/oder Kluppenkörper eingesetzt sind, vorzugsweise lösbar und damit auswechselbar verankert sind;

Figur 7:  ein Diagramm bezüglich des Ölverbrauchs in Abhängigkeit der Foliendicke und damit einer veränderten Last;

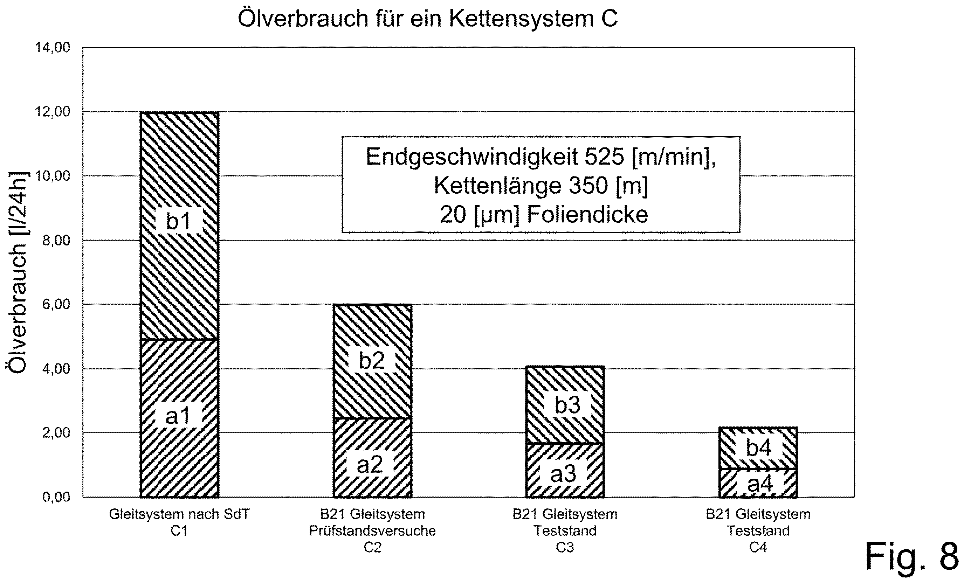

Figur 8:  ein Diagramm bezüglich eines unterschiedlichen Ölverbrauchs für vier verschiedene Kettensysteme teils nach dem Stand der Technik und teilweise bei erfindungsgemäßer Ausgestaltung der Gleitelemente;

Figur 9:  ein Diagramm bezüglich Reibungskoeffizienten eines erfindungsgemäßen Gleitelementes.

Grundsätzlicher Aufbau einer Querreckanlage:

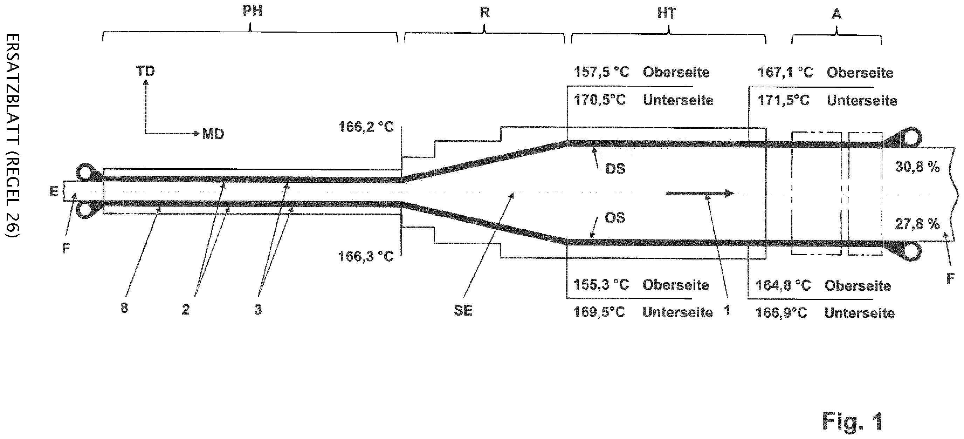

Die nachfolgend beschriebene Folien-Breit- oder Quer-Reckanlage, die nachfolgend auch kurz als TD-Reckanlage (TD = Transverse Direction) bezeichnet wird, weist bekanntermaßen zwei symmetrisch ausgebildete Antriebssysteme auf. In Figur 1 sind die beiden vertikal zur Zeichen-Ebene verlaufenden und symmetrisch zur SymmetrieEbene SE angeordneten Antriebssysteme eingezeichnet, wobei zwischen den beiden auf geschlossenen Bahnen 2 umlaufenden Antriebssystemen die zu behandelnde, d.h. zu reckende Materialbahn insbesondere in Form eines Kunststofffolienfilms F längs der Abzugsrichtung 1 (also in Maschinenrichtung MD) hindurchbewegt wird.

Die erläuterte TD-Reckanlage kann dabei auch Teil einer sequentiellen Reckanlage sein, die üblicherweise eine der Querreckanlage (Querreckrahmen) vorgelagerte Längsreckstufe umfasst (im Zweifelsfall kann diese Längsreckstufe der Querreckstufe aber auch nachgeordnet sein). Die Erfindung lässt sich grundsätzlich aber auch bei Pentagraph-Systemen einsetzen, also bei Simulatanreckanlagen, bei denen über Scherensysteme die längs Führungsschienen fortbewegten und mit Kluppen ausgestatteten Transportketten unter Verwendung von Steuerungsschienen in einer divergierenden Reckzone nicht nur in Querrichtung der Reckanlage auseinandergefahren sondern auch in Längsrichtung der Reckanlage zunehmend beabstandet werden, um die gleichzeitige Längs- und Querreckung durchzuführen.

Die in Figur 1 gezeigte Reckanlage umfasst also zwei auf den beiden umlaufenden Bahnen 2 in Umlaufrichtung angetriebene Kettentransportsysteme 3.

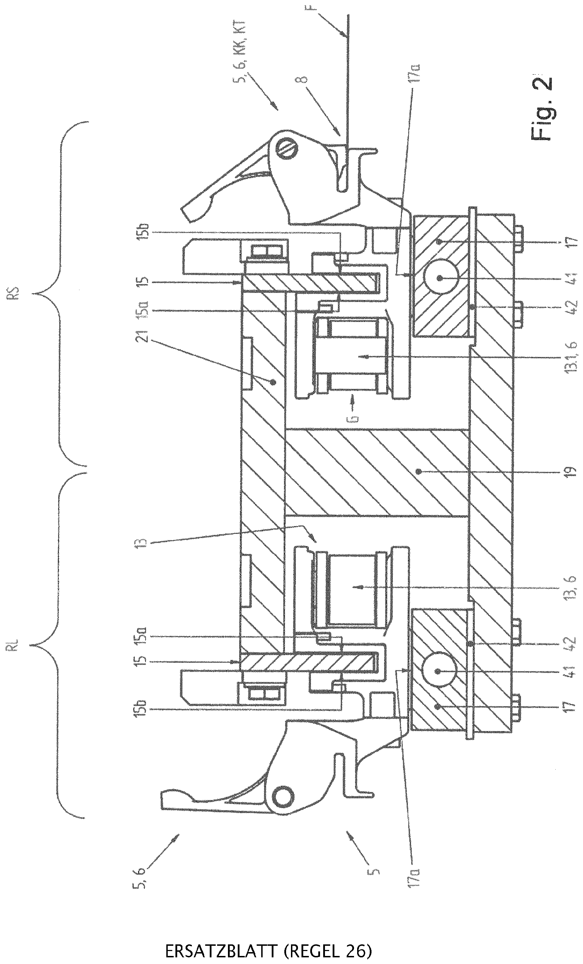

Eine monoaxiale oder uniaxiale Folie F (wenn also eine Längsreckanlage der gezeigten Querreckanlage vorgelagert ist) oder eine unverstreckte Folie F (wobei im Folgenden von Folie gesprochen wird, obgleich mit einer derartigen Reckanlage allgemein eine Behandlungsbahn F entsprechend behandelt und quergereckt werden kann, so dass die Erfindung insoweit nicht auf eine Kunststofffolienbahn beschränkt ist) läuft im Einlaufbereich E in die Reckanlage ein und wird dort von nachfolgend noch erörterten Kluppen, wie sie beispielsweise anhand von Figur 2 gezeigt sind, an beiden Rändern 8 ergriffen und eingeklemmt, und zwar auf der so genannten Operator-Seite (OS - operator side) sowie der antriebsseitigen Drive-Seite (DS - drive side). Die Folie F wird dann in einer nachfolgenden Vorheizzone PH erwärmt, und nachfolgend einer Reckzone R zugeführt, um hier in Querrichtung TD verstreckt zu werden. Anschließend durchläuft der verstreckte Film F verschiedene Wärmebehandlungszonen HT, bei denen auch eine Relaxation des Filmes erfolgen kann. Am Ende der Reckanlage in der sogenannten Auslaufzone A wird der Film durch geeignete Mittel ausgekluppt und verlässt dann die Querreckmaschine, also die Querreckanlage TD.

Im Folgenden wird ferner von einer Kluppen-Transporteinheit KT gesprochen, die nachfolgend teilweise auch als Kluppen-Ketteneinheit KK bezeichnet wird (Figur 2). Diese Kluppen-Transporteinheit KT bzw. Kluppen-Ketteneinheit KK kann verschiedene technische Ausführungen/Varianten aufweisen. Hier soll exemplarisch nur eine Variante geschildert werden, weitere Varianten sind aus dem Stand der Technik dem Fachmann bekannt. Die erwähnte Kluppen-Transporteinheit KT bzw. Kluppen-Ketteneinheit KK umfasst zum einen das so genannte Kluppenteil 6 welches mit dem Ketten- oderTransportteil 7 verbunden ist. Im erläuterten Beispiel, bei welchem eine Transportkette zum Einsatz gelangt, wird bevorzugt von einem Kettenteil 7 gesprochen, welches Teil der Kluppen-Ketteneinheit KK ist.

Wie bekannt ist und anhand von Figur 2 im Querschnitt gezeigt ist, befinden sich diese Kluppen-Ketteneinheiten KK, d.h. also der erwähnte Kluppenteil 6 und das Kettenteil 7 in einem umlaufenden Transportsystem 3, welches zum einen eine Trägerstruktur, d.h. einen Trägeraufbau 11 sowie eine umlaufende Transport-Kette 13 umfasst, an der die erwähnten Kluppenteile 6 mitlaufend befestigt oder ausgebildet sind. DerTrägeraufbau 11 umfasst eine Führungsschiene 15. Neben dieser Führungsschiene 15 ist ferner noch eine das Gewicht der Kette und der Kluppen aufnehmende Tragschiene 17 vorgesehen, die nachfolgend auch teilweise als Gewichtslaufschiene 17 bezeichnet wird. Wie sich aus der nachfolgenden Erläuterung noch ergibt, erfolgt die Führung und Abstützung der Transportkette mit den daran mit verfahrbaren Kluppen an der Führungsschiene 15 unter Verwendung von erfindungsgemäß ausgestalteten Gleitkörpern GK, die an der Transportkette untenliegend und insbesondere an den Kluppen oder Kluppenkörpern mit diesen mitlaufend vorgesehen bzw. montiert sind.

Die erläuterte Tragstruktur kann als gemeinsame Tragstruktur für das Transportsystem sowohl auf der Reck- oder Prozessseite RS als auch auf der Rücklaufseite RL verwendet werden (Figur 1 und 2). Aus dem Stand der Technik sind dem Fachmann auch andere Varianten bekannt, bei denen die Tragstruktur durch die Führungs- bzw. Steuerschiene erfolgt.

In Figur 2 ist ein Querschnitt durch das Transportsystem zu ersehen, nämlich mit einer gemeinsamen Tragstruktur 11, die neben einem in der Mitte angeordneten, eher vertikal verlaufenden Träger 19, einen darüber abgestützten Querträger 21 umfasst, an dessen gegenüberliegenden voneinander weg weisenden Enden jeweils die von oben nach unten verlaufende, im Querschnitt in der Regel rechteckförmige Schiene 15 montiert ist, nämlich wie erwähnt auf der Reckseite RS zum einen und auf der Rückseite RL zum anderen. Zum Beispiel bei einer derartigen gemeinsamen Traganordnung befindet sich das Transportsystem gemeinsam innerhalb eines Ofens O. Dieser Ofen umgibt sowohl die Vorheizzone PH, die Reckzone R als auch die Nachheizzone oder Relaxationszone HT, so dass letztlich nur die auf der Einlass- und Auslassseite vorgesehenen Umlenk- und Antriebssysteme außerhalb des Ofens O zu liegen kommen.

Wie erwähnt, wird die Transportkette 13 sowohl auf der Auslauf- wie der Einlaufseite durch Auslauf- und/oder Einlaufräder AR bzw. ER angetrieben und umgelenkt.

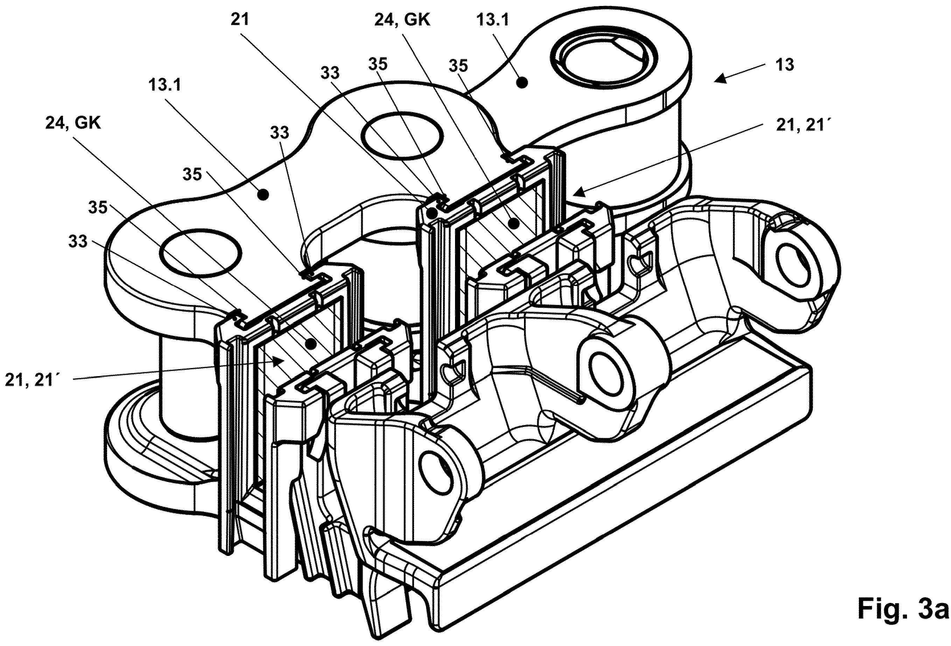

Aus Figur 3a ist dabei ein Ausschnitt eines Beispiels für eine Transportkette 13 zu ersehen, wobei die Transportkette in bekannter Weise jeweils Kettenglieder 13.1 umfasst, die gelenkig miteinander verbunden sind.

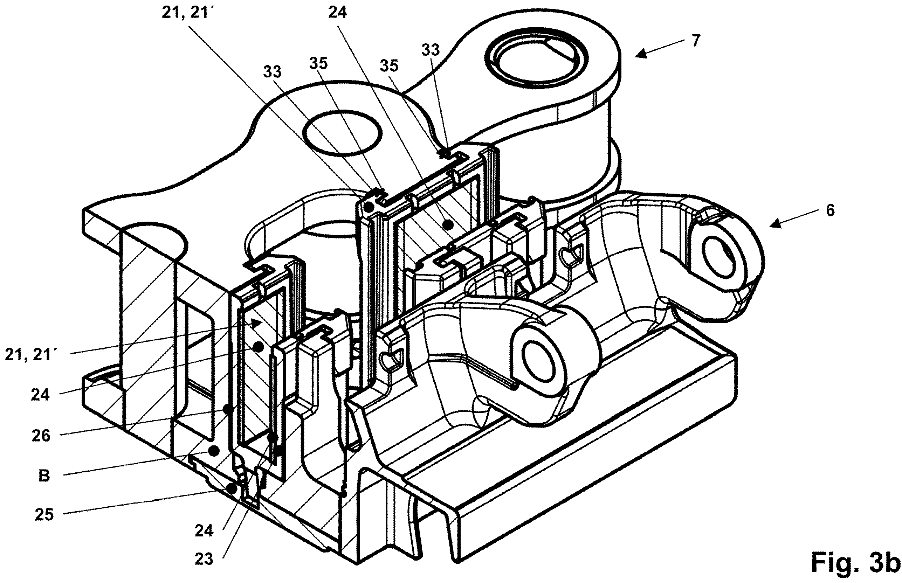

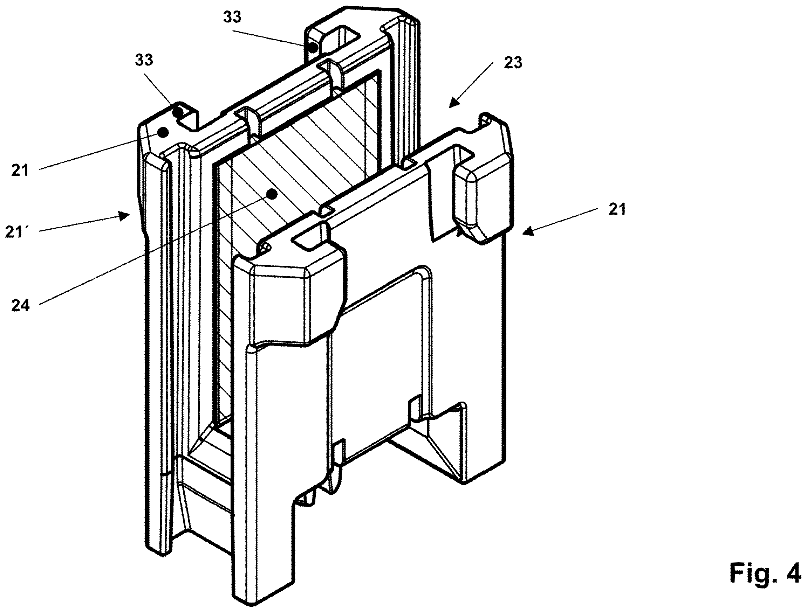

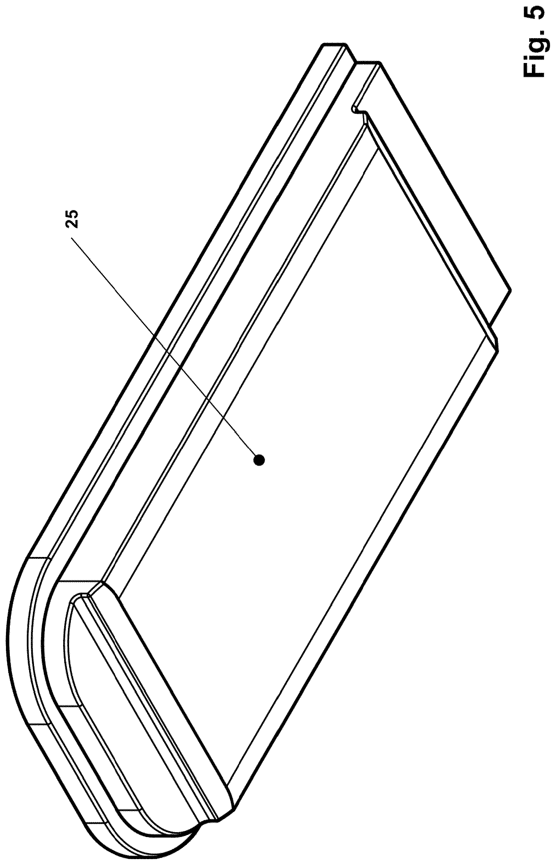

Dabei ist in Figur 3b eine der Figur 3a entsprechende exemplarische Darstellung einer Transportkette ohne Kluppen gezeigt, und zwar teilweise in einem Querschnitt, der durch einen die Kettenglieder durchsetzenden Kettenbolzen verläuft. In dieser Querschnittsdarstellung sind nicht nur die in der U-förmigen Ausnehmung 23 des Gleitschuhs 21 eingesetzten Gleitelemente 24 für die Führungsschiene zu ersehen, sondern auch die Bodengleitplatte 25, mit der die Transportkette auf einer entsprechenden Oberseite einer Gleitfläche einer Führungsschiene aufliegt. Ein entsprechender Gleitschuh 21 ist dazu in Figur 4 und ein Gleitbodenelement 25 in Figur 5 in räumlicher Darstellung wiedergegeben.

Dabei kann der Gleitschuh 21 selbst aus einem faserverstärkten thermoplastischen Kunststoff vorzugsweise in Form von PEEK (Polyetheretherketon) bestehen oder dieses Material überwiegend umfassen, in welchem in Wechselwirkung zu den beiden gegenüberliegenden seitlichen und in der Regel vertikal ausgerichteten Führungsflächen der Führungsschiene 15 entsprechende Gleitelemente oder Gleitplatten 24 eingesetzt sind, die erfindungsgemäß gestaltet sind, ebenso wie die in Figur 5 dargestellte Gleitbodenelement oder -platte 25 zur Wechselwirkung mit der in der Regel nach oben weisenden Führungsfläche einer Führungsschiene 15.

Die gesamte Anordnung ist z.B. dergestalt, dass zwischen dem Kluppenteil 6 (d.h. dem eigentlichen Kluppenabschnitt) und dem Kettenteil 7 (d.h. dem eigentlichen Kettenabschnitt) eine U-förmige Ausnehmung 26 unter Ausbildung eines untenliegenden Brückenteils B (worüber das Kluppen- mit dem Kettenteil verbunden ist) vorgesehen ist, wobei eine entsprechende Führungsschienen-Gleitlagerung 21' eingesetzt ist, die nachfolgend teilweise auch als Gleitschuh 21 bezeichnet wird.

Diese Führungsschienen-Gleitlagerung 21' umfasst also einen im Querschnitt U-förmigen Gleitkörper oder Gleitschuh 21 mit entsprechender Breite oder Länge in Richtung der Führungsschiene 15, um hier die entsprechenden Führungskräfte aufzunehmen. Es soll hervorgehoben werden, dass die Gleitelemente jede beliebige Form annehmen können und nicht auf die genannte U-Form beschränkt sind.

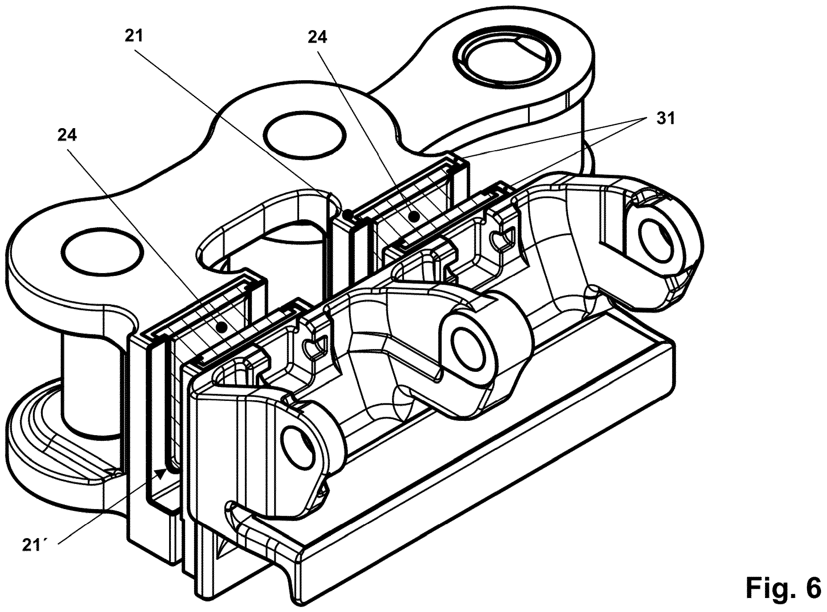

Anhand von Figur 6 ist in Abweichung zu Figur 3a und 3b nur dargestellt, dass die Gleitelemente 24 auch direkt in entsprechende Ausnehmungen in derTransportkette und insbesondere im Kluppenkörper bevorzugt lösbar und damit auswechselbar eingesetzt sein können. Dabei können schwalbenschwanzförmige Hinterschneidungen 31 vorgesehen sein, um die Gleitelemente 24 hierin einzuschieben oder einzuclipsen etc.. Ebenso kann das Gleitbodenelement 25 auf der Unterseite befestigt werden. Bezüglich der Befestigungsarten und Varianten gibt es grundsätzlich keine Grenzen. Alle Abwandlungen sind hierbei möglich.

Ansonsten kann ein vollständiger Gleitschuh 21 mit zugehörigen, darin eingesetzten (bevorzugt lösbar eingesetzten) Gleitelementen 24 in die U-förmige Ausnehmung zu dem Kluppenkörper eingesetzt werden, z.B. auch mittels Vorsprüngen 33, die in entsprechende Ausnehmungen 35 im Kluppenkörper eingeschoben werden können (Figur 4).

Anhand der in schematischer Draufsicht gemäß Figur 1 gezeigten Querreckanlage (die auch beispielsweise die erste oder zweite Stufe in der sequentiellen Querreckanlage darstellen kann) können dann Versuche bezüglich eines realen Ölverbrauchs unter Verwendung unterschiedlicher Gleitelemente durchgeführt werden.

Bei den durchgeführten Versuchen wurden unterschiedliche Gleitelemente verwendet, ausgehend von Gleitelementen, wie sie nach dem Stand der Technik bekannt sind. Eingesetzt wurden insbesondere Gleitelemente, die an den einzelnen Kluppen der Transportkette angebracht waren und mit der Gleitfläche der Führungsschienen und/oder Tragschienen wechselwirken und dabei entsprechend dem Stand derTechnik aus faserverstärktem PEEK-Material bestanden. Entsprechende Messungen wurden dann für erfindungsgemäße Gleitelemente durchgeführt, die nachfolgend kurz als B21 abgekürzt wiedergegeben werden. Somit konnten reale Ölverbrauchswerte unter realen Produktionsbedingungen einer Reckanlage gemessen werden. Als Kriterien dienten dabei als mittelbare Größen die Drehmomente der Antriebsmotoren am Ein- und Auslauf der Reckanlage. Über diese Größen können mittelbar die Reibwerte der entsprechenden Gleitpaarungen ermittelt werden.

Entsprechend der Darstellung gemäß Figur 1 ergeben sich dabei beispielsweise die nachfolgenden realen Ergebnisse:

- Die Drehmomente der Einlaufmotoren betragen beispielsweise 55% des Gesamtdrehmoments (hier 4.400 [Nm]),
- die Auslaufdrehmomente betragen beispielsweise auf der sogenannten Antriebsseite (DS = driveside) 31% des Gesamtdrehmoments (hier 18.400 [Nm]), und
- die Auslaufdrehmomente auf der sogenannten Bedienerseite (OS = operatorside) betragen beispielsweise 28% des Gesamtdrehmoments (hier, wie erwähnt, 18.400 [Nm]).

An den einzelnen Positionen der Reckzone und der Wärmebehandlungs-/Kühlzone sind in Figur 1 die Temperaturen jeweils an der Ober- bzw. Unterseite der Führungsschienen/Tragschienen angegeben.

Bei dem erläuterten Versuchsaufbau gemäß Figur 1 werden beispielsweise vier Schmier-Aggregate verwendet, nämlich am Einlass (inlet), im Bereich der mittleren Antriebsseite (middledrive side), auf der mittleren Bedienerseite (middleoperator side) und am Auslass (outlet).

Dabei ist in der nachfolgenden Tabelle für diese vier Schmiermittel-Zuführaggregate ein Beispiel für die entsprechenden täglichen Schmiermittelmengen angegeben, wobei ein bestimmter Geschwindigkeitsfaktor (1.2) und ein bestimmter Dickenfaktor (1.0) angesetzt sind. Die vorletzte Spalte ergibt dabei den theoretisch ermittelten Wert von 0.483 l/pro Tag.

Die letzte Spalte gibt an den vier Schmiermittel-Aggregat-Zuführstellen real gemessene Schmiermittelwerte wieder, also den tatsächlichen Ölverbrauch, wobei in der letzten Zeile die gesamte tägliche Schmiermittelmenge angegeben ist.

| Schmier-Ort | Verbrauch [l/Tag] | Geschwindigkeits-Faktor | DickenFaktor | Verbrauchs-Vorgabe [l/Tag] | Tatsächlicher Verbrauch [l/Tag] |
|---|---|---|---|---|---|
| Einlass | 0,42 | 1,2 | 1,0 | 0,483 | 0,464 |
| mittlere Antriebsaeite | 0,42 | 1,2 | 1,0 | 0,483 | 0,435 |
| mittlere Betreiberseite | 0,42 | 1,2 | 1,0 | 0,483 | 0,493 |
| Auslass | 0,42 | 1,2 | 1,0 | 0,483 | 0,341 |

Erfindungsgemäße Gleitelemente oder Gleitkörper

Bereits im Stand der Technik sind Gleitkörper bzw. Gleitelemente vorgeschlagen worden, die aus Graphit bestehen oder zu einem wesentlichen Anteil Graphit umfassen. Beschrieben wurde bereits, dass gemäß dem Stand derTechnik vorgeschlagen wurde Graphit-Gleitelemente einzusetzen, die unter Verwendung von Polymeren imprägniert wurden.

Im Rahmen der Erfindung hat sich aber nunmehr gezeigt, dass die Verwendung derartiger Polymere nur dazu führt, dass - soweit die Graphit-Gleitkörper über Poren verfügen - diese Poren vollgesetzt werden. Dies hat dann zur Folge, dass in diese Poren kein Schmiermittel wie beispielsweise Öl eindringen kann, wodurch letztlich die Gleitfähigkeit sogar herabgesetzt wird.

Von daher hat sich im Rahmen der Erfindung gezeigt, dass Gleitkörper aus Graphit und insbesondere Elektrographit verwendet werden sollten, die eine Mindest-Porengröße aufweisen.

Diese Mindest-Porengröße sollte bei etwa 8 % oder über 8 % liegen. Gute Werte lassen sich dann erzielen, wenn die Porengröße zumindest 9 % oder 10 % und mehr beträgt. Werte unterhalb von 25 % sind dabei voll ausreichend und befriedigend.

Durch diese Porengröße kann dann Schmiermittel wie beispielswiese Öl in diese Poren eindringen, wodurch die langfristige Gleitfähigkeit eines derartigen Graphit-Gleitelementes gegenüber herkömmlichen Lösungen deutlich verbessert wird. Letztlich kann durch die Kapillarkräfte das Schmier- und Gleitmittel in diese Porenöffnungen eindringen und trägt damit zu einer Verringerung des gesamten Schmiermittelbedarfs bei. Als besonders vorteilhaft hat es sich bei den Versuchen gezeigt, wenn die Poren der Gleitelemente möglichst vollständig mit Öl getränkt werden, indem sie z.B. über mehrere Stunden vor dem Einbau in die Lagerelemente in einem Ölbad gelagert werden. Diese primäre Sättigung verringert den Abrieb erheblich.

Die Effekte können nochmals dadurch verbessert werden, dass ein Graphit-Gleitkörper verwendet wird, der mit einem Mindestanteil von anorganischen Salzen und insbesondere Metallsalzen imprägniert ist. Vor allem eine Imprägnierung mit Metallsalzen in Form von Phosphaten (beispielsweise tertiäre Orthophosphate) führen zu besonders guten Ergebnissen. Insbesondere kann hier auch Aluminiumphosphat ($AlPO_4$) genannt werden. Eine weitere Verbesserung lässt sich dadurch erzielen, dass das verwendete Graphitpulver zudem einer isostatischen Pressung während des Herstellungsprozesses der Gleitelemente unterzogen wird. Schließlich soll angemerkt werden, dass bei der Imprägnierung mit Metallsalzen Metallsalzverbindungen wie insbesondere Metallphosphate zum Einsatz gelangen sollten, deren Korngröße im Bereich von 3 $\mu$m und mehr und vorzugsweise unter 150 $\mu$m.

Zusammenfassend kann also festgehalten werden, dass sich die erfindungsgemäßen Gleitkörper durch das eine oder andere der nachfolgenden Merkmale auszeichnen, vor allem in Verbindung:

- Die Gleitelemente sind mit einer Imprägnierung versehen, vorzugsweise in Form von anorganischen Salzen, insbesondere Phosphaten (Salze und Esther der Orthophosphorsäure),
- Die Gleitelemente sind mit Metallsalzen insbesondere in Form von Aluminiumphosphat ($AlPO_4$) imprägniert,
- Die anorganischen Salze insbesondere in Form von Phosphaten und besonders bevorzugt in Form des Aluminiumphosphats sind in dem Gleitelement oder Gleitkörper mit einem Anteil von 1 Gew-% bis 20 Gew-% eingelagert,
- Die Phosphate und insbesondere Metallphosphate sollen bevorzugt Korngrößen im Bereich von d50 = 30 $\mu$m, d90 = 100 $\mu$m und d50 = 5 $\mu$m, d90 = 15 $\mu$m und besonders bevorzugt von d50 = 7 $\mu$m, d50 = 30 $\mu$m aufweisen.

- Die Gleitelemente sind nicht nur in einem Oberflächenbereich oder einer Oberflächenschicht bis zu 1 mm oder 2 mm sondern bevorzugt vollständig durchimprägniert,
- Die zur Herstellung der Gleitelemente benötigten Ausgangsstoffe werden mit einem geeigneten Verfahren miteinander "verbacken", beispielsweise durch eine isostatische Verpressung, wodurch die Gleitelemente letztlich erzeigt werden,
- Die Partikelgrößen und die Partikelverteilung des Graphitpulvers, welches als Ausgangsmaterial für die Herstellung der Gleitelemente verwendet wird, sollen ebenfalls in bestimmten Bereichen liegen. Das Maximum der Partikelgrößenverteilung (mittlere Partikelgröße, Erwartungswert) des als Ausgangsmaterial verwendeten Graphitpulvers wie aber auch des durch Verpressen hergestellten Gleitelementes liegt zwischen 3 bis 15 $\mu$m, je nach gewünschten mechanischen Werten, z.B. der Biegefestigkeit. Bevorzugt haben sich mittlere Partikelgrößen zwischen 7 bis 10 $\mu$m als geeignet erwiesen. Als Medianwert d(50) wurden Größen zwischen 14-18 $\mu$m, d(10)zwischen 2-4 $\mu$m und d(90) zwischen 42-50 $\mu$m gemessen (Zur Charakterisierung einer Partikelgrößenverteilung werden die Werte $d_{10}$, $d_{50}$ und $d_{90}$ verwendet. Der Wert von $d_{50}$ ist als mittlere Partikelgrößenverteilung definiert [DIN 13320]. Die Werte $d_{10}$ und $d_{90}$ werden zur Beschreibung der Breite einer Partikelgrößenverteilung $d_{breite} = d_{90} - d_{10}$ verwendet).
- Die offenen Porengrößen und/oder Porenverteilung der Gleitelemente beträgt zumindest $\geq$ 8 Vol% oder vorzugsweise $\geq$ 9 Vol%, 10 Vol%, 11 Vol%, 12 Vol%, 13 Vol%, 14 Vol% oder $\geq$ 15 Vol%. Die entsprechenden Werte für die offene Porengröße des Gleitelementes soll dabei ferner $\leq$ 20 Vol%, insbesondere $\leq$ 18 Vol%, 16 Vol%, 15 Vol%, 14 Vol%, 13 Vol%, 12 Vol% oder insbesondere $\leq$ 11 Vol% sein.
- Die Gleitelemente weisen beispielsweise ölgesättigte Poren oder allgemein fluidgefüllte Poren auf, und zwar unter üblichen Betriebsbedingungen, wie beispielsweise bei einer Luftfeuchtigkeit von $\geq$ 5 (bevorzugt 8-20) [g/m$^3$].

Dabei wird ferner angemerkt, dass es grundsätzlich so ist, dass bei der Partikelvermessung eine Verteilungskurve, z.B. idealerweise eine Gaußverteilung vorliegt.

Versuche

Es wurden eine Reihe von Versuchen an Reckanlagen durchgeführt, und zwar einmal unter Verwendung von faserverstärkten Gleitelementen, wie sie nach dem Stand der Technik bekannt sind, und zum anderen unter Verwendung von Graphit-Gleitelementen, die bereits ein oder mehrere der erfindungsgemäßen bevorzugten Merkmale aufweisen.

Dazu wird auf die am Ende der Beschreibung beigefügte Eigenschaftabelle verwiesen, in der verschiedene Werte bezüglich herkömmlicher faserverstärkter Graphit-Gleitelemente wie auch eines erfindungsgemäßen Graphit-Gleitelementes zu entnehmen sind.

In der vorstehend erwähnten und am Ende der Beschreibung beigefügten Eigenschaftabelle sind in den Spalten a, b, c, d, e, f, P, SFU sowie SR sind Werte für Graphit-Gleitkörper zu entnehmen, wobei es sich insoweit um Graphit-Gleitkörper handelt, die nach dem Stand der Technik bekannt sind.

In der letzten Spalte sind unter der Kennzeichnung B21 die Daten wiedergegeben, die einen erfindungsgemäßen Graphitkörper betreffen.

Anhand derartiger faserverstärkter Gleitelemente und Graphit-Gleitkörper sind Versuchsreihen durchgeführt worden, wobei anhand der nachfolgend wiedergegebenen Tabelle festgehalten ist, welche Schmiermittelmengen benötigt werden, wenn in einer Reckanlage ein herkömmlicher faserverstärkter PEEK Gleitkörper verwendet wird, und wenn im Gegensatz dazu ein Graphitkörper eingesetzt wird, der bereits ein, zwei oder drei bevorzugte Merkmale aufweist. Dabei wurde ein Kettensystem C eingesetzt, bei welchem eine zu reckende Kunststofffolienbahn mit einer maximalen Vorschubgeschwindigkeit (Grenzgeschwindigkeit) von 525 m/min durch die Reckanlage hindurchbewegt werden konnte. Die verwendeten Gleitkörper haben sich dabei wie folgt unterschieden:

C1: der Gleitkörper C1 besteht aus einem herkömmlichen faserverstärkten-Gleitkörper (PEEK), der wie im Stand der Technik beschrieben mit einer Polymermasse imprägniert wurde.

C2: eine entsprechende Versuchsreihe wurde durchgeführt unter Verwendung eines gegenüber dem Stand der Technik abgewandelten Graphit-Gleitkörpers C2, der beispielsweise eine offene Porengröße von 10 % aufgewiesen hat.

C3: der Gleitkörper C3 ist bei diesem Versuch gegenüber dem Versuchsaufbau unter Verwendung des Gleitkörpers C2 zusätzlich noch mit Aluminiumphosphat durchimprägniert worden.

C4: bei diesem Gleitkörper C4 handelt es sich um einen Graphit-Gleitkörper, der eine Porengröße von 10 % aufweist, der zudem mit Aluminiumphosphat imprägniert wurde, und der ferner einer isostatischen Pressung unterzogen wurde.

Es wurden Versuchsreihen durchgeführt, bei der entsprechende Transportketten mit den Gleitkörpern bis zu 1000 Betriebsstunden eingesetzt wurden und weit über 1000 Betriebsstunden.

Dabei ist in den einzelnen Zeilen der nachfolgend wiedergegebenen Tabelle für die Gleitkörper C1, C2, C3 und C4 ein Basisfaktor Bf angegeben, der die Menge an Gleitmittel [in Liter] pro Minute und Tag wiedergibt, sofern die Vorschubgeschwindigkeit des Kunststofffilms kleiner als 525 m/min ist und dabei die Foliendicke $\leq 20\ \mu m$ ist.

| Kettensystem | Betriebsstunden | C1 [$10^{-3}$] | C2 [$10^{-3}$] | C3 [$10^{-3}$] | C4 [$10^{-3}$] |
|---|---|---|---|---|---|
| Basisfaktor der Gleitfläche [l/m/24 h] (v $\leq$ 300 m/min Foliendicke $\leq 20\ \mu m$ | $\leq$ 1000 h | 28 | 14 | 7 | 5,04 |
| | > 1000 h | 12 | 6 | 4 | 2,52 |
| Grenzgeschwindigkeit [m/min] | | 525 | | | |

Die nachfolgende Tabelle fasst die von der Geschwindigkeit und der Folienlast abhängigen Ölverbräuche zusammen:

| Kettensystem C der Länge 350 [m], der Endgeschwindigkeit 525 [m/min] und 30 [$\mu$m] Foliendicke | Gleitsystem nach Stand der Technik C1 | B21 Gleitsystem Prüfstandsversuche C2 | B21 Gleitsystem Teststand C3 | B21 Gleitsystem Teststand C4 |
|---|---|---|---|---|
| Kettenlänge 350 [m] Bf = 0,014 $\widehat{=}$ 100 % für > 1000h | 4,90 | 2,45 | 1,67 | 0,88 |
| Faktor der Erhöhung aufgrund der Geschwindigkeit | 1,441 | | | |
| | 7,06 | 3,53 | 2,40 | 1,27 |
| Faktor der Erhöhung aufgrund der Foliendicke | 1,15 | | | |
| | 5,64 | 2,82 | 1,92 | 1,01 |
| gesamt nur geschwindigkeitsabhängig | 11,96 | 5,98 | 4,07 | 2,15 |
| gesamt mit Folienlast | 17,60 | 8,80 | 5,98 | 3,17 |

Bei einer Grenzgeschwindigkeit von 525 m/min und einer Kettenlänge von 350 [m] haben sich dabei die in der letzten Zeile wiedergegebenen Verbrauchswerte ergeben.

Zum besseren Verständnis soll dazu eine Beispielrechnung für das Kettensystem C1 mit einem standartmäßigen PEEK-Gleitsystem mit einer Kettenlänge von KL = 350 m wiedergegeben werden. Bei einem Einsatz mit mehr als 1000 Betriebsstunden ergibt sich dabei ein Grundverbrauch von

$$\text{Verbrauch} = KL * Bf = 14 * 350\ m * 10^{-3} = 4,9$$

Für ein erfindungsgemäß bevorzugtes Ketten-Gleitsystem gemäß des Beispiels C4 ergibt sich dann eine deutlich reduzierte Ölmenge von lediglich 0,9 [l/24 h].

Bevorzugte Werte für einen erfindungsgemäßen Graphit-Gleitkörper

In der am Ende der Beschreibung beigefügten Erfindungs-Tabelle sind für den erfindungsgemäßen Graphitkörper Werte angegeben, wie sie bevorzugt werden.

Entscheiden sind zur Erzielung des erfindungsgemäßen Erfolgs ist dabei, dass der erfindungsgemäße Graphit-Köper über die zumindest bevorzugt angegebene Porengröße verfügt.

Die Schmiermittelreduzierung kann dann weiter verbessert werden, wenn der erfindungsgemäße Graphitkörper ferner mit einem anorganischen Salz, insbesondere Metallsalz imprägniert ist, vorzugsweise mit einem Metallphosphat, insbesondere unter Verwendung von Aluminiumphosphat. Eine weitere Verbesserung ergibt sich alternativ zu dem vorstehend genannten Punkt und bevorzugt kumulativ dann, wenn der Graphitkörper bevorzugt zusätzlich einer isostatischen Pressung unterzogen wurde.

Grundsätzlich ist es ausreichend, wenn die Imprägnierung mit dem anorganischen Salz in einer ausreichenden Oberflächenschicht mit einer ausreichenden Schicht am Gleitkörper oder Gleitelement durchgeführt wird oder vorgesehen ist. Bevorzugt wird jedoch ein Gleitelement verwendet, welches mit dem anorganischen Salz vollständig durchimprägniert ist.

Bevorzugte Gleitpaarungen

Neben den vorstehend erläuterten die erfindungsgemäßen Vorteile aufweisenden Gleitelementen ergeben sich günstige verringerte Reibwerte und damit ein geringerer Schmiermittelbedarf insbesondere bei Transportketten, wie sie auch bei Reckanlagen zum Einsatz gelangen, dann, wenn die entsprechenden mit den Gleitelementen zusammenwirkenden Tragelemente ebenfalls spezifische Eigenschaften aufweisen.

Insbesondere im Fall einer Reckanlage handelt es sich bei den mit der Transportkette und/oder den Kluppen zusammenwirkenden Tragelementen um Führungsschienen, Tragschienen und/oder ggf. Steuerungsschienen. Die erfindungsgemäßen Gleitelemente sind dabei bevorzugt an der Transportkette bzw. den Kluppen vorgesehen, und zwar an den Stellen, die mit den entsprechenden Gleitflächen an der Führungsschiene und/oder der Transportschiene (oder ggf. der Steuerungsschiene) wechselwirken. Eine gute physikalische Kompatibilität ergibt sich durch eine Paarung von Werkstoffen mit gleichen oder ähnlichen thermischen Ausdehnungskoeffizienten. Durch die gezielte Auswahl der Rezepturbestandteile ist der Ausdehnungskoeffizient sowohl der Gleitelemente wie der damit wechselwirkenden Schienen einstellbar.

Die erfindungsgemäßen Gleitelemente weisen dabei vor allem Vorteile auf, wenn sie in Reckanlagen eingesetzt werden. Dies ist bisher im Stand der Technik nie einer gesonderten Überprüfung unterzogen worden.

Eine gute physikalische Kompatibilität ergibt sich dann durch die Paarung von Werkstoffen mit gleichem oder ähnlichem thermischen Ausdehnungskoeffizienten. Gute Gegenlaufpartner für die mit den erfindungsgemäßen Gleitelementen ausgestatteten Transportketten/ -kluppen sind beispielsweise Schienen, die aus harten Werkstoffen gebildet sind, wie beispielsweise Grauguss, Hartmetall, Aluminiumoxid, Siliziumkarbid, Glas, DLC-beschichtete Werkstoffe sowie insbesondere hart-legierte Stähle. Es handelt sich dabei also um Materialien, wie sie insbesondere für Schienen, d.h. Führungsschienen und Tragschienen in Reckanlagen ohnehin verwendet werden.

Nur beispielhaft sollen die Eigenschaften eines derartigen Gegenlaufpartners in Form einer Führungsschiene wiedergegeben werden, wie sie in den durchgeführten Versuchen eingesetzt war:

| | |
|---|---|
| Material: | 1.7225 = 42CrMo4V (Vergütungsstahl) |
| Oberflächenrauheit: | Rz5 (geschliffen) |
| Härte: | Oberfläche > 600-650 HV 0,5 |
| | in Tiefe 0,2 > 400 HV 0,5 |
| | Kernhärte 0,3 > 300 + 50 HV 0,5 |

Wärmeausdehnungskoeffizient

bei 20°C - 200°C:    $12{,}1 \times 10^{-6}\ K^{-1}$

Veränderung der benötigten Schmiermittelbmenge in Abhängigkeit weiterer Faktoren

Grundsätzlich lassen sich weitere Faktoren benennen, die zu einer Veränderung der Schmiermittelmenge führen.

Obgleich die nachfolgend erörterten Veränderungen der Schmiermittelmenge auch bei herkömmlichen Graphitkörpern eintreten, sind die entsprechenden Effekte zum Teil besonders überraschend dann, wenn ein erfindungsgemäßer Graphitkörper verwendet wird. Dabei ist bei Verwendung des erfindungsgemäßen Graphitkörpers oder des bevorzugt entsprechend weitergebildeten erfindungsgemäßen Graphitkörpers in allen Fällen sichergestellt, dass die benötigte Schmiermittelmenge deutlich geringer ist als bei vergleichbaren Lösungen nach dem Stand der Technik, insbesondere unter Verwendung von so genannten PEEK-Gleitkörpern.

Dabei wird davon ausgegangen, dass diese Gleitkörper wie im Stand der Technik auch bevorzugt in Kontakt mit Führungsschienen/Tragschienen (und/oder Steuerungsschienen) insbesondere in Reckanlagen verwendet werden, deren Schienen aus Stahl bestehen oder Stahl in der Grundsubstanz umfassen.

Geschwindigkeitsabhängiger Faktor

Zu dem im Rahmen der oben genannten Tabelle wiedergegebenen Basiswert kommt ab einer Grenzgeschwindigkeit ein linear ansteigender geschwindigkeitsabhängiger zusätzlicher Ölverbrauch hinzu.

In Versuchen hat sich dabei folgender Zusammenhang gezeigt

$$F_V = (_vE - _vG)[m/min] * 0,3 [\% \ min/m] + 1$$

Wobei $F_v$ der Faktor für den zusätzlichen Ölverbrauch bei einer Endgeschwindigkeit $_vE$ bezogen auf eine Foliendicke von 20 $\mu$m ist. Die Grenzgeschwindigkeit vG ist dabei abhängig vom jeweiligen Kettensystem. Bei dem hier betrachteten Kettensystem C liegt vG bei 300 [m/min]. Bis zur vG wird ein konstanter Ölverbrauchswert angesetzt.

Lastabhängiger Faktor

Bei Foliendicken größer als 20 $\mu$m erhöht sich der Ölverbrauch aufgrund der zusätzlichen Kräfte durch die höhere Foliendicke gemäß der Beziehung:

$$F_D = (th -20) [\mu m] * 1,5 [\%/\mu m] + 1$$

Wobei $F_D$ der Faktor bezüglich der Foliendicke th ist.

Die entsprechenden Zusammenhänge sind aus der Figur 6 (Diagramm) Diagramm fehlt bzw. ist falsch gekennzeichnet zu ersehen, wobei die Schmiermittelmengen eingezeichnet sind, die bei Verwendung eines Graphit-Gleitkörpers (C1, C2, C3 oder C4) entsprechend der oben wiedergegebenen Definition verwendet werden.

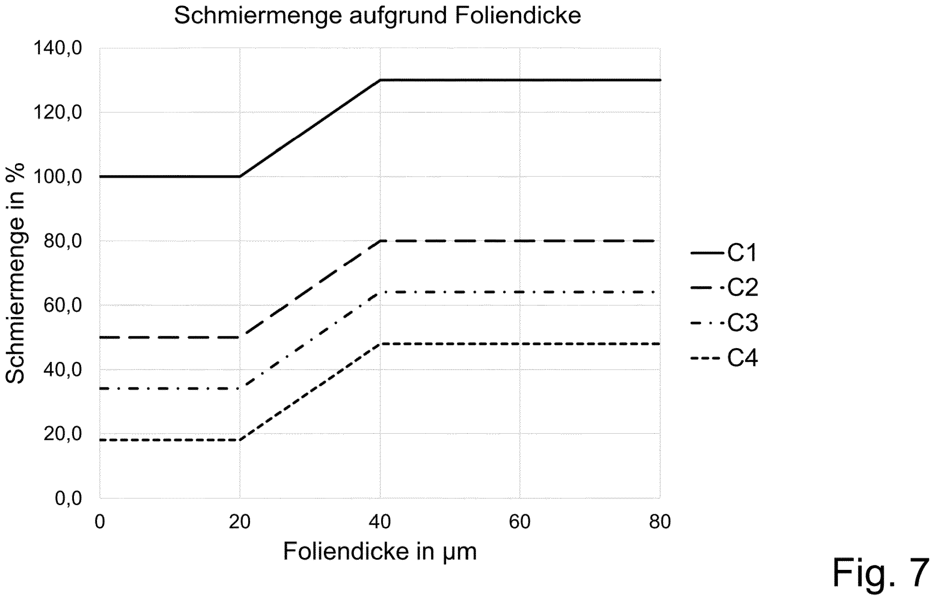

Unter Verwendung dieser vorstehend genannten ergänzenden Werte ergibt sich also der täglichen Öl- oder Schmiermittelverbrauch in einer entsprechenden Reckanlage unter Verwendung einerTransportkette, die mit den beschriebenen Gleitkörpern auf einer Führungsschiene längs bewegt wird, wie aus Figur 7 zu ersehen ist.

Dabei ist in Figur 7 der Ölverbrauch mit seinem geschwindigkeitsabhängigen Faktor Fv und dem lastabhängigen Faktor $F_D$ wiedergegeben, je nachdem ob ein Gleitstein C1, C2, C3, C4 verwendet wird. In Abhängigkeit der verwendeten Gleitsteine C1 - C4 ist dabei in Figur 7 der geschwindigkeitsabhängige Faktor Fv abgekürzt wiedergegeben als a1, a2, a3 bzw. a4 und der lastabhängige Faktor $F_D$ abgekürzt als b1, b2, b3 oder b4.

Auch daraus ist zu ersehen, dass die erfindungsgemäßen Gleitkörper zu einer drastischen Verringerung des Schmiermittelbedarfs führen und zwar schon dann,

- wenn nur die Porengröße die das erwünschte minimale Größenmaß aufweist (von mehr als 8 % und bevorzugt weniger als 20 %),
- zudem im Falle eines Gleitsteins C3 der Graphitkörper zusätzlich noch mit einem Metallsalz vorzugsweise in Form eines Metallphosphats imprägniert wurde, d.h. im gezeigten Ausführungsbeispiel unter Verwendung von Aluminiumphosphat, und
- wenn ein entsprechend so präparierter Gleitkörper zusätzlich noch einer isostatischen Pressung unterzogen worden ist.

Dabei ist in Figur 7 links der Ölmittelverbrauch für eine Reckanlage unter Verwendung von Gleitkörpern nach dem Stand der Technik C1 dargestellt (PEEK-Gleitsystem) und rechts die erfindungsgemäß bevorzugte Variante mit einem Gleitkörper C4.

Abnehmender Schmiermittelverbrauch mit höherer Temperatur der Gleitpaarung (Führungsschiene - Gleitelement)

Letztlich soll noch angemerkt werden, dass sowohl bei Verwendung von Graphit-Gleitkörpern nach dem Stand der Technik wie aber auch bei Verwendung von erfindungsgemäßen Graphit-Gleitkörpern der Reibungskoeffizient mit zunehmend höherer Temperatur der Gleitpaarung (Führungsschiene - Gleitelement) abnimmt.

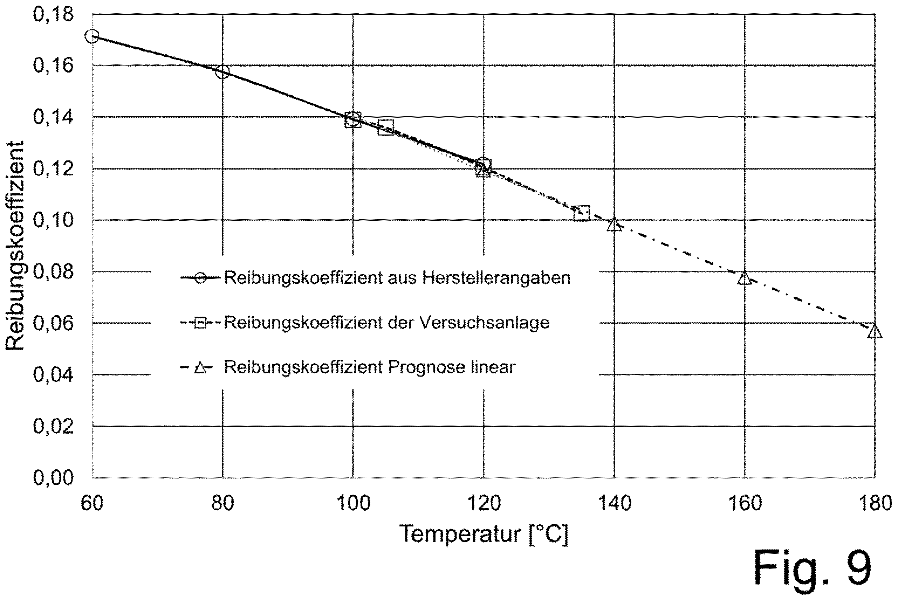

Dies ist anhand von Figur 9 dargestellt.

Von daher kann der Schmiermittelbedarf auch dadurch weiter gesenkt werden, wenn die Gleitpaarung F auf ein entsprechendes höheres Temperaturniveau gebracht worden sind.

Die Reibungskoeffizienten in Figur 9 gliedern sich dabei in drei Abschnitte, wobei der erste Abschnitt R1 den Reibungskoeffizienten gemäß Herstellerangaben betrifft, im Abschnitt R2 den Reibungskoeffizienten betrifft, wie er aufgrund der Versuchsanlage ermittelt wurde, und im Abschnitt R3 den Reibungskoeffizienten widerspiegelt, wie er

aufgrund einer linearen Prognose aufgrund der ersten beiden Reibungskoeffizient-Verläufe gemäß R1 und R2 herleitbar ist.

Abnehmende Reibung und dadurch bedingte Verringerung des Schmiermittelbedarfs durch entsprechend eingelaufene Graphitelemente mit abgeschliffener Graphit-Gleitkörperoberfläche

Ein Vergleich von benutzten und bereits eingesetzten Graphit-Gleitelementen zeigt wesentliche Unterschiede in der Topographie auf. Neue Graphit-Gleitelemente weisen in der Regel pro Flächenelement Höhenprofilunterschiede bis zu ca. 5 $\mu$m auf, während diese Höhenprofilunterschiede bei benutzten Graphit-Gleitelementen häufig nur noch einen Höhenunterschied von ca. 1 $\mu$m betragen.

Die Höhenstruktur ist also bei eingelaufenen Gleitelementen vergleichmäßigt, wobei Spitzen an der Graphitkörper-Gleitfläche abgeschliffen wurden. Diese Vergleichmäßigung der Topographie trägt auch dazu bei und erklärt, warum eingelaufene Gleitelemente einen geringeren Ölverbrauch aufweisen.

Erfindungsgemäße Gleitelemente

Es ist bereits die so genannte Eigenschaftstabelle erwähnt worden, die auf der nachfolgenden Seite wiedergegeben ist.

Dort sind Werte für Gleitelemente entsprechender verschiedener Versuchsaufbauten festgehalten worden.

Die Gleitelemente a, b, c, d, e, f, P, SFU, SR sowie B21 mit den jeweilig aufgeführten Eigenschaften wurden dabei in gleichen Versuchen und Versuchssaufbauten ermittelt. Die Gleitelementen a-f, P SFU und SR, sind nach dem Stand der Technik bekannt. Das in der vorletzten Spalte angegebene und mit der Benennung B21 gekennzeichnete Gleitelement betrifft ein optimiertes erfindungsgemäßes Gleitelement.

Die entsprechenden Werte für die Dichte, Härte, Biegefestigkeit, Druckfestigkeit, das Elastizitätsmodul, die betreffenden Werte für die Wärmeausdehnung, für die thermische Leitfähigkeit etc. sind aus dieser Eigenschaftstabelle für die Gleitelemente nach dem Stand der Technik wie für das erfindungsgemäße Gleitelement B21 zu ersehen.

In der letzten Spalte E ist angegeben, dass bevorzugte Werte für das erfindungsgemäße Gleitelement z.B. bis zu 75 % unterhalb des in der vorletzten Spalte angegebenen Werts für das erfindungsgemäße Gleitelement B21 bis zu 25 % über diesem Werten liegen können.

In der letzten Spalte E sind also die bevorzugten Bereichsangaben benannt, die die bevorzugten Eigenschaften für das erfindungsgemäße Gleitelement wiedergeben. Dadurch soll zum Ausdruck kommen, dass beispielsweise die Porosität, die bei dem erfindungsgemäßen Gleitelement B21 mit 10 Vol% angegeben ist, schwanken kann von 7,5 Vol% bis 12,5 Vol%.

Dabei können die Abweichungen zwischen jedweden Teilbereichen dieser Bereichsangabe liegen.

Mit anderen Worten kann z.B. bei der Angabe - ≤ 25 % jeder Wert um vorzugsweise weniger als -25 %, -24 %, -23 %, -22%, ..., -5 %, -4 %, -3 %, -2 % oder um weniger als -1 % von dem optimalen Wert abweichen.

Ebenso sollen die Werte z.B. bei Angabe von + ≤ 25 % bevorzugt nicht größer sein als +25 %, insbesondere nicht größer als +24 %, +23 %, + 22%, ..., +5 %, +4 %, +3 %, + 2% oder nicht größer sein als +1 % bezüglich des in der vorletzten Spalte jeweils angegebenen Wertes.

Dabei sind die vorstehend genannten Abweichungen vor allem von Bedeutung bezüglich der Porosität. Die anderen Werte könnten ggf. auch über die unterhalb bzw. oberhalb der angegebenen Bereichsgrenzen liegen.

Eigenschafts-Tabelle (Eigenschaftsvergleich einiger Graphite, die als Gleitelemente getestet wurden)

| Eigenschaft | Einheiten | Standard | a | b | c | d | e | f | P | SFU | SR | B21 | E |
|---|---|---|---|---|---|---|---|---|---|---|---|---|---|
| Dichte | g/cm$^3$ | DIN IEC 60413/203 | 1,70 | 1,75 | 1,70 | 1,68 | 1,73 | 2,55 | 1,78 | 2,02 | 1,88 | 1,85 | + $\leq$ 25% |
| Härte HR$_{5/100}$ | Rockwell B | DIN IEC 60413/303 | 105 | 105 | 105 | 95 | 105 | 115 | 86 | 115 | 110 | 90 | + $\leq$ 25% |
| Biegefestigkeit | MPa | DIN IEC 60413/501 | 55,2 | 40 | 60 | 35 | 75,8 | 79,3 | 112 | 105 | 85 | 58,6 | + $\leq$ 25% |
| Druckfestigkeit | MPa | DIN 51910 | 155 | 100 | 180 | 100 | 120 | 290 | 175 | 215 | 170 | 148 | + $\leq$ 25% |
| Elastizitätsmodul | GPa | DIN 51915 | 22 | 16 | 18 | 8,96 | 22 | 20,7 | 14,5 | 12 | 13,5 | 13,8 | + $\leq$ 25% |
| Wärmeausdehnung (20-200°C) [$\mu$m/m°C] | 10$^{-6}$K$^{-1}$ | DIN 51909 | 3,06 | 6,5 | 4,14 | 3,78 | 11,0 1) | 5,94 | 8,1 | 7,8 | 4,7 | 3,96 | $\pm$ $\leq$ 25% |
| Thermische Leitfähigkeit | Wm$^{-1}$K$^{-1}$ | DIN 51908 | 12 | 11 | 14 | 25 | 6 | 32,9 | 70 | 82 | 100 | 79,5 | + $\leq$ 25% |
| Thermische Beständigkeit In oxidierender Atmosphäre | °C | | 350 | 350 | 350 | 500 | 180 | | | | | 600 | $\pm$ $\leq$ 25% |
| Porosität (offen) | Vol % | | 11 | | 8 | 14 | 0 | $\leq$ 2,5 | 20 | 8 | 10 | 10 | + $\leq$ 25% |
| Spez. Elektrischer Widerstand | $\mu\Omega$m | | | | | | | | 19,5 | 10 | 13 | | + $\leq$ 25% |
| Mittlere Korngröße | $\mu$m | | | | | | | | 1 | <5 | 3 | | - $\leq$ 25% + $\leq$ 100% |
| 1)von 20-150°C | | | | | | | | | | | | | |

**Patentansprüche**

1. Gleitelement insbesondere für eine Reckanlage und/oder Transportkette, umfassend Graphit oder Elektrographit, mit folgenden Merkmalen:

   - das Gleitelement weist Poren auf, wobei die offene Porengröße $\geq 7,5$ Vol% ist, und
   - die Partikelgröße der als Ausgangsmaterial für die Gleitelemente verwendeten Graphitpartikel liegt zwischen 3 $\mu$m und 15 $\mu$m,

   **gekennzeichnet durch** die folgenden weiteren Merkmale:

   - die als Ausgangsmaterial für die Herstellung des verwendeten Graphitpartikel liegen in einer Partikelgrößenverteilung derart vor, dass der Medianwert d(50) für die Partikelgröße zwischen 14 $\mu$m bis 18 $\mu$m und die Werte d(10) zwischen 2 $\mu$m bis 4 $\mu$m und für d(90) zwischen 42 $\mu$m und 50 $\mu$m liegen,
   - das Maximum der Partikelgrößenverteilung, nämlich die als Erwartungswert zu erzielende mittlere Partikelgrösse des als Ausgangsmaterial für die Herstellung der Gleitelemente verwendeten Graphitpulvers als auch des durch Verpressen hergestellten Gleitelementes weisen eine maximale Partikelgrößenverteilung zwischen 3 $\mu$m bis 15 $\mu$m auf, und
   - das Gleitelement ist mit anorganischen Salzen imprägniert und/oder anorganische Salze sind im Gleitelement eingelagert.

2. Gleitelement nach Anspruch 1, **dadurch gekennzeichnet, dass** die offene Porengröße zumindest $\geq 8$ Vol% oder vorzugsweise $\geq 9$ Vol%, 10 Vol%, 11 Vol%, 12 Vol%, 13 Vol%, 14 Vol% oder $\geq 15$ Vol% ist.

3. Gleitelement nach Anspruch 1 oder 2, **dadurch gekennzeichnet, dass** die offene Porengröße des Gleitelements $\leq 20$ Vol%, insbesondere $\leq 18$ Vol%, 16 Vol%, 15 Vol%, 14 Vol%, 13 Vol%, 12 Vol% oder insbesondere $\leq 11$ Vol% ist.

4. Gleitelemente nach einem der Ansprüche 1 bis 3, **dadurch gekennzeichnet, dass** die Partikelgröße der als Ausgangsmaterial für die Gleitelemente verwendeten Graphitpartikel größer oder gleich ist als 4 $\mu$m, 5 $\mu$m, 6 $\mu$m, 7 $\mu$m, 8 $\mu$m, 9 $\mu$m oder 10 $\mu$m oder kleiner ist als 14 $\mu$m, 13 $\mu$m, 12 $\mu$m, 11 $\mu$m, 10 $\mu$m, 9 $\mu$m, 8 $\mu$m, 7 $\mu$m, 6 $\mu$m oder kleiner ist als 5 $\mu$m.

5. Gleitelemente nach einem der Ansprüche 1 bis 4, **dadurch gekennzeichnet, dass** das Maximum der Partikelgrößenverteilung (mittlere Partikelgröße, Erwartungswert) des als Ausgangsmaterial für die Herstellung der Gleitelemente verwendeten Graphitpulvers als aber auch des durch Verpressen hergestellten Gleitelementes eine maximale Partikelgrößenverteilung zwischen 7 $\mu$m bis 10 $\mu$m aufweisen.

6. Gleitelemente nach einem der Ansprüche 1 bis 5, **dadurch gekennzeichnet, dass** die im Gleitelement vorgesehenen Poren zumindest zu 60 %, vorzugsweise zu mehr als 65 %, 70 %, 75 %, 80 %, 85 %, 90 %, und insbesondere zu über 95 % oder vorzugsweise zumindest 96 %, 97 %, 98 % und insbesondere zu 99 % oder zu 100 % mit Öl getränkt sind.

7. Gleitelement nach einem der Ansprüche 1 bis 6, **dadurch gekennzeichnet, dass** die anorganischen Salze zumindest in einer Oberflächenschicht des Gleitelements eingelagert und/oder das Gleitelement in diesem Bereich mit anorganischen Salzen imprägniert ist, wobei das Gleitelement vorzugsweise mit den anorganischen Salzen durchimprägniert ist, vorzugsweise mit einer gleichen oder weniger als 20 % oder insbesondere weniger als 10 % davon abweichenden Dichteverteilung.

8. Gleitelement nach einem der Ansprüche 1 bis 7, **dadurch gekennzeichnet, dass** das Gleitelement mit anorganischen Salzen imprägniert ist oder anorganische Salze eingelagert umfasst, die aus Phosphaten oder tertiären Orthophosphaten und vorzugsweise aus Aluminiumphosphat bestehen oder diese umfassen.

9. Gleitelement nach einem der Ansprüche 1 bis 8, **dadurch gekennzeichnet, dass** die anorganischen Salze 1 Gew.-% bis 20 Gew.-% oder 1 Gew.-% bis 10 Gew.-%, vorzugsweise mehr als 2 Gew.-%, 3 Gew.-% oder 4 Gew.-% und vorzugsweise weniger als 10 Gew.-%, insbesondere weniger als 8 Gew.-%, 7 Gew.-%, 6 Gew.-% oder 5 Gew.-% betragen.

10. Gleitelement nach einem der Ansprüche 1 bis 9, **dadurch gekennzeichnet, dass** das Gleitelement als isostatisch verpresstes Gleitelement ausgebildet ist.

**11.** Gleitelement nach einem der Ansprüche 1 bis 10, **dadurch gekennzeichnet, dass** die Gleitoberfläche des Gleitelementes eine maximale Rauigkeit aufweist, bei der Höhenabweichungen unter 5 $\mu$m, insbesondere unter 4 $\mu$m, 3 $\mu$m oder bevorzugt unter 2 $\mu$m oder 1 $\mu$m liegen.

**12.** Gleitelement nach Anspruch 11, **dadurch gekennzeichnet, dass** die Gleitoberfläche des Gleitelements abgeschliffen ist.

**13.** Reckanlage oder Transportkette für eine Reckanlage, mit Gleitelementen nach zumindest einem der Ansprüche 1 bis 12.

**14.** Reckanlage oder Transportkette für eine Reckanlage nach Anspruch 13, **dadurch gekennzeichnet, dass** als Gegenlaufpartner für die Transportkette eine Tragkonstruktion vorzugsweise in Form einer Führungs- und/oder Tragschiene und/oder Steuerschiene vorgesehen ist, deren thermischer Ausdehnungskoeffizient den thermischen Ausdehnungskoeffizienten der Gleitelemente entspricht oder um weniger als 25 %, insbesondere weniger als 20 %, 15 %, 10 % oder weniger als 5 % davon abweicht.

**15.** Reckanlage oder Transportkette für eine Reckanlage nach Anspruch 13 oder 14, **dadurch gekennzeichnet, dass** die Führungsschiene und/oder Tragschiene und/oder Steuerschiene aus einem Material mit einem Härtegrad besteht, das den Härtegrad der Gleitelemente entspricht oder weniger als 25 %, insbesondere weniger als 20 %, 15 %, 10 % oder weniger als 5 % davon abweicht.

**16.** Reckanlage oder Transportkette für eine Reckanlage nach einem der Ansprüche 13 bis 15, **dadurch gekennzeichnet, dass** die Führungs- und/oder Trag- und/oder Steuerschiene über einen Temperaturgrenzwert hinaus zur Verringerung des Reibwertes erwärmt ist.

**Claims**

**1.** Sliding element, in particular for a stretching device and/or conveyor chain, comprising graphite or electrographite, with the following features:

- that the sliding element has pores, the open pore size being ≥ 7.5 vol%, and
- in that the particle size of the graphite particles used as starting material for the sliding elements is between 3 $\mu$m and 15 $\mu$m,

**characterized by** the following further features:

- the graphite particles used as starting material for the production of the graphite particle are present in a particle size distribution in which, as median value d(50), the particle size is between 14 $\mu$m and 18 $\mu$m and the values d(10) are between 2 $\mu$m and 4 $\mu$m and for d(90) between 42 $\mu$m and 50 $\mu$m, and
- the maximum particle size distribution, i.e. the average particle size to be obtained as an expected value of the graphite powder used as starting material for the production of the sliding elements and of the sliding element produced by pressing have a maximum particle size distribution of between 3 $\mu$m and 15 $\mu$m, and
- the sliding element is impregnated with inorganic salts and/or inorganic salts are I ncorporated in the sliding element.

**2.** Sliding element according to claim 1, **characterised in that** the open pore size is at least ≥ 8 % by volume or preferably ≥ 9 % by volume, 10 % by volume, 11 % by volume, 12 % by volume, 13 % by volume, 14 % by volume or ≥ 15 % by volume.

**3.** Sliding element according to either claim 1 or claim 2, **characterised in that** the open pore size of the sliding element is ≤ 20 % by volume, in particular ≤ 18 % by volume, 16 % by volume, 15 % by volume, 14 % by volume, 13 % by volume, 12 % by volume or in particular ≤ 11 % by volume.

**4.** Sliding element according to any of claims 1 to 3, **characterised in that** the particle size of the graphite particles used as a starting material for the sliding elements is greater than or equal to 4 $\mu$m, 5 $\mu$m, 6 $\mu$m, 7 $\mu$m, 8 $\mu$m, 9 $\mu$m

or 10 $\mu$m, or is less than 14 $\mu$m, 13 $\mu$m, 12 $\mu$m, 11 $\mu$m, 10 $\mu$m, 9 $\mu$m, 8 $\mu$m, 7 $\mu$m, 6 $\mu$m, or is less than 5 $\mu$m.

5. Sliding elements according to any of claims 1 to 4, **characterised in that** the maximum particle size distribution (mean particle size, expected value) of the graphite powder used as starting material for the production of the sliding elements and of the sliding element produced by pressing have a maximum particle size distribution of between 7 $\mu$m and 10 $\mu$m.

6. Sliding elements according to any of claims 1 to 5, **characterised in that** at least 60 %, preferably more than 65 %, 70 %, 75 %, 80 %, 85 %, 90 %, and in particular over 95 % or preferably at least 96 %, 97 %, 98 % and in particular 99 % or 100 % of the pores provided in the sliding element are soaked with oil.

7. Sliding element according to any of claims 1 to 6, **characterised in that** the inorganic salts are embedded at least in a surface layer of the sliding element and/or the sliding element is impregnated with inorganic salts in this region, the sliding element preferably being fully impregnated with the inorganic salts, preferably in a density distribution which is identical or deviates therefrom by less than 20 % or in particular less than 10 %.

8. Sliding element according to any of claims 1 to 7, **characterised in that** the sliding element is impregnated with inorganic salts or comprises embedded inorganic salts, which consist of or comprise phosphates or tertiary orthophosphates and preferably aluminium phosphate.

9. Sliding element according to any of claims 1 to 8, **characterised in that** the inorganic salts make up 1 % by weight to 20 % by weight or 1 % by weight to 10 % by weight, preferably more than 2 % by weight, 3 % by weight or 4 % by weight and preferably less than 10 % by weight, in particular less than 8 % by weight, 7 % by weight, 6 % by weight or 5 % by weight.

10. Sliding element according to any of claims 1 to 10, **characterised in that** the sliding element is formed as an isostatically pressed sliding element.

11. Sliding element according to any of claims 1 to 10, **characterised in that** the sliding surface of the sliding element has a maximum roughness at which height deviations are below 5 $\mu$m, in particular below 4 $\mu$m, 3 $\mu$m or preferably below 2 $\mu$m or 1 $\mu$m.

12. Sliding element according to claim 112, **characterised in that** the sliding surface of the sliding element is polished.

13. Stretching installation or conveyor chain for a stretching installation, comprising sliding elements according to at least one of claims 1 to 12.

14. Stretching installation or conveyor chain for a stretching installation according to claim 13, **characterised in that**, as a counter partner for the conveyor chain, a carrier construction preferably in the form of a guide rail and/or carrier rail and/or control rail is provided, the thermal expansion coefficient of which corresponds to the thermal expansion coefficient of the sliding elements or deviates therefrom by less than 25 %, in particular less than 20 %, 15 %, 10 % or less than 5 %.

15. Stretching installation or conveyor chain for a stretching installation according to either claim 13 or claim 14, **characterised in that** the guide rail and/or carrier rail and/or control rail consists of a material having a degree of hardness which corresponds to the degree of hardness of the sliding elements or deviates therefrom by less than 25 %, in particular less than 20 %, 15 %, 10 % or less than 5 %.

16. Stretching installation or conveyor chain for a stretching installation according to any of claims 13 to 15, **characterised in that** the guide and/or carrier and/or control rail is heated above a temperature limit value to reduce the coefficient of friction.

**Revendications**

1. Elément de glissement, en particulier, destiné à une installation détirage et/ou une chaine de transport, comprenant du graphite ou de l'électro graphite, avec les caractéristiques suivantes :

- l'élément de glissement présente des pores, la taille des pores ouvertes étant ≥ 7,5 % en volume, et
- la taille particulaire des particules de graphite employées comme matériau de départ pour les éléments de glissement se situe entre 3 $\mu$m et 15 $\mu$m,

**caractérisé par** les autres caractéristiques suivantes :

- les particules de graphite employées en tant que matériau de départ pour la fabrication sont dans une distribution de tailles particulaires telle que la valeur médiane d(50) pour la taille particulaire se situe entre 14 $\mu$m et 18 $\mu$m, et les valeurs d(10) entre 2 $\mu$m à 4 $\mu$m, et pour d(90) entre 42 $\mu$m et 50 $\mu$m,
- le maximum de la distribution de tailles particulaires, en particulier, la taille particulaire moyenne à viser en tant que valeur souhaitée de la poudre de graphite employée en tant que matériau de départ pour la fabrication des éléments de glissement et également de l'élément de glissement fabriqué par pressage présentent une distribution particulaire maximale entre 3 $\mu$m et 15 $\mu$m, et
- l'élément de glissement est imprégné de sels inorganiques, et/ou des sels inorganiques sont incorporés dans l'élément de glissement.

**2.** Elément de glissement selon la revendication 1, **caractérisé en ce que** la taille des pores ouvertes est au moins ≥ 8 % en volume ou de préférence ≥ 9 % en volume, 10 % en volume, 11 % en volume, 12 % en volume, 13 % en volume, 14 % en volume ou ≥ 15 % en volume.

**3.** Elément de glissement selon la revendication 1 ou la revendication 2, **caractérisé en ce que** la taille des pores ouvertes de l'élément de glissement est au moins ≤ 20% en volume, en particulier ≤ 18 % en volume, 16 % en volume, 15 % en volume, 14 % en volume, 13 % en volume, 12 % en volume ou ≤ 11 % en volume.

**4.** Elément de glissement selon l'une des revendications 1 à 3, **caractérisé en ce que** la taille particulaire des particules de graphite employées en tant que matériau de départ pour les éléments de glissement est égale ou supérieure à 4 $\mu$m, 5 $\mu$m, 6 $\mu$m, 7 $\mu$m, 8 $\mu$m, 9 $\mu$m pi 10 $\mu$m, ou inférieure à 14 $\mu$m, 13 $\mu$m, 12 $\mu$m, 11 $\mu$m, 10 $\mu$m, 9 $\mu$m, 8 $\mu$m, 7 $\mu$m, 6 $\mu$m ou inférieure à 5 $\mu$m.

**5.** Elément de glissement selon l'une des revendications 1 à 4, **caractérisé en ce que** le maximum de la distribution de taille particulaire (taille particulaire moyenne, valeur espérée) de la poudre de graphite employée comme matériau de départ pour la fabrication des éléments de glissement mais également aussi de l'élément de glissement fabriqué par pressage présente une distribution de tailles particulaires maximale entre 7 $\mu$m et 10 $\mu$m.

**6.** Elément de glissement selon l'une des revendications 1 à 5, **caractérisé en ce que** les pores prévues dans l'élément de glissement sont remplis à saturation avec de l'huile à au moins 60 %, de préférence, à plus de 65 %, 70 %, 75 %, 80 %, 85 %, 90 %, et en particulier jusqu'à plus de 95 % ou de préférence à au moins 96 %, 97 %, 98 % et en particulier à 99 % ou à 100 %.

**7.** Elément de glissement selon l'une des revendications 1 à 6, **caractérisé en ce que** les sels inorganiques sont incorporés au moins dans une couche de surface de l'élément de glissement, et/ou l'élément de glissement est imprégné de sels inorganiques dans cette plage, où l'élément de glissement est de préférence imprégné à cœur de sels inorganiques, de préférence avec une distribution en densité égale ou inférieure à 20 % ou en particulier n'en déviant de pas plus de 10 %.

**8.** Elément de glissement selon l'une des revendications 1 à 7, **caractérisé en ce que** l'élément de glissement est imprégné de sels inorganiques ou comprend des sels inorganiques incorporés qui sont constitués de phosphates ou d'orthophosphates tertiaires et de préférence de phosphates d'aluminium ou comprennent ceux-ci.

**9.** Elément de glissement selon l'une des revendications 1 à 8, **caractérisé en ce que** les sels inorganiques s'élèvent à 1 % en poids à 20 % en poids ou de 1 % en poids à 10 % en poids, de préférence sont supérieurs à 2 % en poids, 3 % en poids ou 4 % en poids et de préférence sont inférieurs à 10 % en poids, notamment inférieurs à 8 % en poids, 7 % en poids, 6 % en poids ou 5 % en poids.

**10.** Elément de glissement selon l'une des revendications 1 à 9, **caractérisé en ce que** l'élément de glissement est conçu sous forme d'élément de glissement compressé de manière isostatique.

**11.** Elément de glissement selon l'une des revendications 1 à 10, **caractérisé en ce que** la surface de glissement de l'élément de glissement présente une rugosité maximale, chez laquelle des déviations en hauteur sont inférieures à 5 $\mu$m, en particulier inférieures à 4 $\mu$m, 3 $\mu$m ou de préférence inférieure à 2 $\mu$m ou 1 $\mu$m.

12. Elément de glissement selon la revendication 11, **caractérisé en ce que** la surface de glissement de l'élément de glissement est meulée.

13. Installation d'étirement ou chaine de transport pour une installation d'étirement, pourvue d'éléments de glissement selon au moins une des revendications 1 à 12.

14. Installation d'étirement ou chaine de transport pour une installation d'étirement selon la revendication 13, **caractérisée en ce qu'**une structure portante, de préférence sous la forme d'un rail de guidage, et/ou rail de support, et/ou rail de commande, dont le coefficient d'étirement thermique correspond aux coefficients d'étirement thermiques des éléments de glissement ou qui dévie de moins de 25 %, notamment de moins de 20 %, 15 %, 10 % ou de moins de 5 % de ceux-ci, est prévue en tant que partenaire dans le sens inverse pour la chaine de transport.

15. Installation d'étirement ou chaine de transport pour une installation d'étirement selon la revendication 13 ou la revendication 14, **caractérisée en ce que** le rail de guidage, et/ou le rail de support, et/ou le rail de commande, est constitué d'un matériau pourvu d'un degré de dureté qui correspond au degré de dureté des éléments de glissement ou en dévie de moins de 25 %, en particulier de moins de 20 %, 15 % 10 % ou de moins de 5 %.

16. Installation d'étirement ou chaine de transport pour une installation d'étirement selon l'une des revendications 13 à 15, **caractérisée en ce que** le rail de guidage, et/ou le rail de support, et/ou le rail de commande, est chauffé au-delà d'une valeur limite de température pour la diminution de la valeur de frottement.

Fig. 1

Fig. 2

ERSATZBLATT (REGEL 26)

Fig. 3a

Fig. 3b

Fig. 4

EP 3 648 948 B1

Fig. 5

Fig. 6

Schmiermenge aufgrund Foliendicke

Fig. 7

EP 3 648 948 B1

Ölverbrauch für ein Kettensystem C

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5797172 A
- WO 201494803 A1
- DE 19857289 C1
- DE 3925737 A1
- EP 0138117 A2
- EP 0471329 B1
- EP 1652877 B1
- DE 4221318 A1
- DE 19749785 A1
- EP 0471329 A1
- EP 1652877 A1